# EUROPEAN PATENT SPECIFICATION

(11) **EP 2 770 761 B1**
(45) Date of publication and mention of the grant of the patent: **20.04.2016**
(21) Application number: 13156464.3
(22) Date of filing: 22.02.2013
(51) Int. Cl.: H04W 4/12, H04L 12/58

(54) **Communication device and method for profiling and presentation of message threads**
Kommunikationsvorrichtung und Verfahren zum Profilieren und Darstellen von Nachrichtenthreads
Dispositif de communication et procédé de profilage et présentation de chaînes de messages

(43) Date of publication of application: 27.08.2014
(73) Proprietor: BlackBerry Limited, Waterloo, ON N2K 0A7 (CA)
(72) Inventor: Smith, Andrew Christopher, Mississauga, Ontario L4W 0B5 (CA)
(74) Representative: Moore, Barry

(56) References cited:
- US-A1- 2009 029 674
- US-B1- 7 007 226
- US-B1- 8 332 477

## Description

### Technical Field

The present disclosure relates to automated profiling of messages and message branches in a message thread and their display by a communication device.

### Technical Background

Prolific users of messaging services (such as email, instant messaging, direct messaging, social messaging, and the like) often receive a large volume of messages on a daily basis. The particular reasons for receiving a high volume of messages naturally vary from user to user; the high volume may be due, for example, to a user having a rather large number of correspondents.

One common contributing factor to a high volume of messages, though, is repeated communications from a group of correspondents participating in a conversation via the messaging service. The group of participants may be small-even as little as two, consisting of the user and one other participant-but the volume of messages that generated in the conversation can quickly add up as the conversation continues. In the case where the user is conversing via messaging with two or more other participants, the number of messages can of course increase even faster, as multiple participants respond to the same messages. The net result is that the user may find it difficult to keep on top of incoming messages as they reach his or her message inbox.

Given the potential number of messages that must be presented to the user for review, the appearance of a message inbox can be quite cluttered. Even though some messages can be advantageously grouped according message thread or conversation (e.g. where the messages are logically or semantically linked, as in the case of a chain of reply messages), not every message is of equal value or importance to the user, it can be difficult for the user to locate those messages of particular interest at a given time. Accordingly the user may find him or herself spending a significant amount of time in merely triaging messages to find those ones that require a response or attention.

### Brief Description of the Drawings

In drawings which illustrate by way of example only embodiments of the present disclosure, in which like reference numerals describe similar items throughout the various figures,
FIG. 1 is a block diagram of an example of a communication device.
FIG. 2 is a schematic diagram of an example network for use in communicating with the device of FIG. 1.
FIGS. 3A-C are representations of messages to which the examples in the present disclosure may be applied.
FIG. 4 is an illustration of an example graphical user interface comprising a message inbox display.
FIG. 5 is a schematic diagram representing a logical relationship among the messages of FIGS. 3A-C.
FIGS. 6A-C are illustrations of example graphical user interfaces comprising various message listing displays for the messages represented in FIG. 5.
FIGS. 7A-C are illustrations of example graphical user interfaces comprising an alternate presentation of the messages represented in FIG. 5.
FIG. 8 is a further schematic diagram representing a further logical relationship among the messages of FIGS. 3A-C.
FIGS. 9A and 9B are illustrations of further example graphical user interfaces comprising a message inbox displays for the messages represented in FIG. 8.
FIG. 10 is still a further example graphical user interface comprising an alternate presentation of the messages represented in FIG. 8.
FIG. 11 comprises further representations of messages added to the set of FIG.s 3A-C.
FIG. 12 is a further schematic diagram representing a further logical relationship among the messages of FIGS. 3A-C and FIG. 11.
FIGS. 13A and 13B are further example graphical user interfaces comprising a message inbox display for messages represented in FIG. 12.
FIG. 14 is a flowchart depicting a method of determining a profile for a branch of a message thread.
FIG. 15 is a flowchart depicting a method of obtaining a branch identifier for a message thread.
FIG. 16 is a schematic diagram illustrating communication flow between various components implementing the embodiments of this disclosure.

### Detailed Description of the Invention

The examples set out herein will be described and illustrated primarily in relation to communication devices (also referred to as electronic devices), such as tablet computers, smartphones, or any other portable electronic device, which may or may not be equipped to communicate over wireless networks or public networks. It will be appreciated by those skilled in the art, however, that this description is not intended to limit the scope of the described embodiments to implementation on these particular systems. For example, the methods and systems described herein may be applied to any appropriate communication device or data processing device adapted for composition and addressing of messages or the selection of one or more users, recipients, or other delegates, whether or not the device is portable or wirelessly enabled, whether or not it is provided with voice communication capabilities. Additionally or alternatively the device maybe adapted to process data and carry out operations on data in response to user commands for any number of purposes, including productivity and entertainment. Thus, the embodiments described herein may be implemented on electronic devices adapted for communication or messaging, including without limitation cellular phones, smartphones, wireless organizers, personal digital assistants, desktop computers, terminals, laptops, tablets, handheld wireless communication devices, notebook computers, portable gaming devices, Internet-connected televisions, set-top boxes, digital picture frames, digital cameras, in-vehicle entertainment systems, entertainment devices such as MP3 or video players, and the like. As expressed in the various examples herein, the communication device may have an integrated display interface; however, the examples need not be limited to such embodiments. The communication device may be configured to output data to be painted to an external display unit such as an external monitor or panel, television screen, projector, or virtual retinal display (via a data port or transmitter, such as a Bluetooth® transceiver, USB port, HDMI port, DVI port, and the like). References herein to a "display," "display screen" or "display interface" are intended to encompass both integrated and external display units.

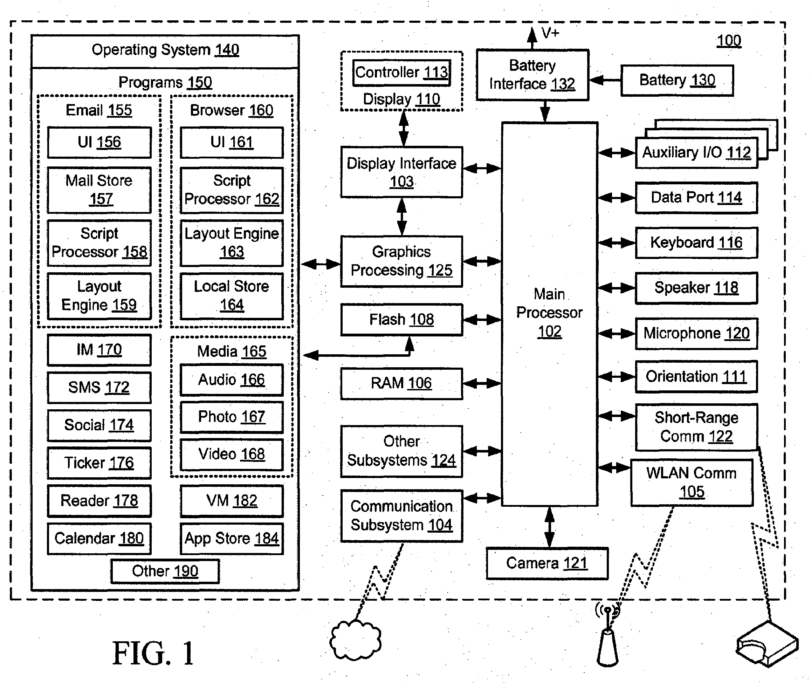

FIG. 1 is a block diagram of an example of an electronic device 100 that may be used as the communication device in the embodiments and examples described herein. The electronic device 100 includes a number of components such as a main processor 102 that controls the overall operation of the electronic device 100. It will be understood by those skilled in the art that the schematic of FIG. 1 is merely representative of only particular aspects of a device, and omits other components that are typically included for ease of exposition. Furthermore, it should also be understood that many of the components described in FIG. 1 are optional and that an electronic device can be successfully used with the various embodiments described herein even when select components described in relation to FIG. 1 are omitted.

The electronic device 100 maybe a battery-powered device including a battery interface 132 for receiving one or more rechargeable batteries 130. Communication functions, including data and voice communications, are performed through one or more communication subsystems 104, 105, and/or 122 in communication with the processor 102. Data received by the electronic device 100 can be decompressed and decrypted by a decoder operating according to any suitable decompression techniques, and encryption/decryption techniques according to one or more various encryption or compression standards known to persons of skill in the art.

If equipped with a communication subsystem 104, this subsystem 104 receives data from and sends data to wireless network 200. In this embodiment of the electronic device 100, the communication subsystem 104 is configured in accordance with one or more wireless communications standards. New wireless communications standards are still being defined, but it is believed that they will have similarities to the network behaviour described herein, and it will also be understood by persons skilled in the art that the embodiments described herein are intended to use any other suitable standards that are developed in the future. The wireless link connecting the communication subsystem 104 with the wireless network 200 represents one or more different Radio Frequency (RF) channels, operating according to defined protocols specified for the wireless communications standard, and optionally other network communications.

The electronic device 100 may be provided with other communication subsystems, such as a wireless LAN (WLAN) communication subsystem 105 or a short-range and/or near-field communications subsystem 122 also shown in FIG. 1. The WLAN communication subsystem 105 may operate in accordance with a known network protocol such as one or more of the 802.11™ family of standards developed or maintained by IEEE. The communications subsystems 105 and 122 provide for communication between the electronic device 100 and different systems or devices without the use of the wireless network 200, over varying distances that may be less than the distance over which the communication subsystem 104 can communicate with the wireless network 200. The subsystem 122 can include an infrared device and associated circuits and/or other components for short-range or near-field communication.

It should be understood that any of the communication subsystems 104, 105, 122 may optionally be included in the electronic device 100. Alternatively, a communication subsystem provided in a dongle or other peripheral device (not shown) may be connected to the electronic device 100, either wirelessly or by a fixed connection such as a USB port, to provide the electronic device 100 with access to a network. If provided onboard the electronic device 100, the communication subsystems 104, 105 and 122 may be separate from, or integrated with, each other.

The main processor 102 also interacts with additional subsystems, if present, such as a Random Access Memory (RAM) 106, a flash memory 108, a display 110, other data and memory access interfaces such as an auxiliary input/output (I/O) subsystem 112 or a data port 114, a keyboard 116, a speaker 118, a microphone 120, a camera 121, the communications 104, 105, 122 and other device subsystems 124. The auxiliary subsystem 112 can include devices such as a mouse, trackball, infrared fingerprint detector, or a roller wheel with dynamic button pressing capability, optical joystick, trackpad, or other user input device. The electronic device may also be provided with an orientation sensor or module 111, used to detect the orientation of the display 110. In the case of a portable (such as a handheld) electronic device 100, display 110 is typically integrated with the device 100, as well as the orientation module 111. In the case of an electronic device 100 where the display 110 is external to the device, the orientation module 111 may be integrated with the external display screen. The orientation module 111 may include any suitable module that may be selected by those skilled in the art, such as an accelerometer which may be used to detect gravity- or motion-induced forces and their direction. For example, the orientation module can have a digital three-axis accelerometer connected to an interrupt and serial interface of the processor 102, or another microcontroller of the device 100 (not shown). The processor 102 or microcontroller determines the device 100 orientation in accordance with acceleration measured by the accelerometer and provides the detected orientation to the operating system, or raw acceleration data measured by the accelerometer can be sent to the processor 102 so that device orientation is determined by the operating system of the electronic device 100. The orientation module 111 may thus be,considered to include the accelerometer, microcontroller or those modules of the processor 102 executing to determine orientation. It should be understood that the orientation module 111 may optionally be present at an external display, and provide orientation determination for the display screen associated with the electronic device 100. Whether the orientation module 111 is located at an external display or is located at the electronic device 100 having an integrated display, the orientation determined by the orientation module 111 is related to the orientation of the display screen associated with the mobile device.

The orientation or acceleration detected at the electronic device 100 (or at the external display 110) may be processed to determine a response of the electronic device 100, such as an orientation of a graphical user interface displayed on the display 110 in response to a determination of the current orientation detected. Upon determination of the current orientation or a change in orientation, the operating system may provide notifications to executing applications of the current orientation.

In some embodiments, the electronic device 100 may be a touchscreen-based device, in which the display interface 110 is a touchscreen interface that provides both a display for communicating information and presenting graphical user interfaces, as well as an input subsystem for detecting user input that maybe converted to instructions for execution by the device 100. The touchscreen display interface 110 may be the principal user interface provided on the electronic device 100, although in some embodiments, additional buttons, variously shown in the figures or a trackpad, or other input means may be provided. If a touchscreen display interface 110 is provided, then other user input means such as the keyboard 116 may or may not be present. The controller 216 and/or the processor 102 may detect a touch by any suitable contact member on the touch-sensitive display 110. A touchscreen device is particularly presented in the various examples described herein; however, it will be understood by those skilled in the art that these examples can also be implemented with devices that do not have touchscreens, with suitable modification within the scope of the skilled worker's abilities. For instance, in some examples, a touch or gesture is applied to the display of the device to initiate an action; this can be accomplished using other input means as well.

A visualization processor or module 125 may be included in the electronic device 100. The visualization module 125 analyzes and processes data for visualization on the display 110. Data originally prepared for visualization on a large-screen display may require additional processing prior to visualization on a small-screen display. This additional processing may be accomplished by the visualization module 125. As will be appreciated by those of skill in the art, the visualization module can be implemented in hardware, software, or a combination thereof, and can include a dedicated image processor and associated circuitry, or can be implemented within main processor 102. In some electronic devices 100, particularly those provided with integrated displays 100 (although as noted above, the embodiments herein are not necessarily restricted to only such devices), the processor 102, visualization module 125, and other components are configured to respond to detected changes in orientation of the device 100.

The electronic device 100 also includes an operating system 140 and software components 155 to 190, collectively indicated as programs 150 in FIG. 1. The operating system 140 and the software components 155 to 190 that are executed by the main processor 102 are typically stored in a persistent store such as the flash memory 108, which can alternatively be a read-only memory (ROM) or similar storage element (not shown). Those skilled in the art will appreciate that portions of the operating system 140 and the software components 155 to 184, such as specific device applications, or parts thereof, can be temporarily loaded into a volatile store such as the RAM 106. Other software components 190 besides those explicitly illustrated in FIG. 1 can also be included, as is well known to those skilled in the art.

Software applications maybe installed on the electronic device 100 during its manufacture (for example, during initial loading of the operating system 140), or at a subsequent time once the electronic device 100 is delivered to the user. These software applications may be supplied by the electronic device manufacturer or operating system provider, or may be third party applications. The additional applications can be loaded onto the electronic device 100 through at least one of the communications subsystems 104, 105, 122, the auxiliary I/O subsystem 112, the data port 114, or any other suitable device subsystem 124. This flexibility in application installation increases the functionality of the electronic device 100 and can provide enhanced on-device functions, communication-related functions, or both.

The various applications that may be installed on the electronic device 100 include messaging applications, such as the email messaging application 155, instant messaging (IM) application 170, and short message service (SMS) service 172. Various alternatives exist for message applications, as is well known to those skilled in the art. Messages that have been sent or received by the user are typically stored in the flash memory 108 of the electronic device 100 or some other suitable storage element in the electronic device 100. Each message type may have a distinct message store in the device memory. In at least some embodiments, some of the sent and received messages can be stored remotely from the device 100 such as in a data store of an associated host system with which the electronic device 100 communicates. There may be multiple ones of these applications installed on the electronic device 100; for example, a distinct application may be used for each different account provisioned on the electronic device 100, even if the message types associated with those accounts are the same. Other types of messaging applications may be included on the electronic device 100, and other ones of the depicted applications may also provide access to a form of messaging service, such as social networking applications 172. Social networking applications and others are generally configured to receive or retrieve data over a network for presentation to the user, such as the browser application 160, ticker application 176, and reader application 178. The browser application 160 may also be used to access a message service provided over the network.

Other types of software applications can also be installed on the electronic device 100, such as calendar applications 180, media applications 165 for processing and presenting audio files 166, photos and other graphic files 167, and videos 168. One or more virtual machines 182 may be provided on the electronic device 100 for executing applications requiring a runtime environment other than that provided by the operating system 140. A further application 184 may provide access over a network to a vendor site offering software applications for download (and optionally for purchase) to the electronic device 100.

In use, a received signal such as a text message, an email message, or webpage download will be processed by the receiving communication subsystem 104, 105, 122 and input to the main processor 102. The main processor 102 will then process the received signal for output to the display 110 or alternatively to the auxiliary I/O subsystem 112. A subscriber can also compose data items, such as email messages, for transmission over a network.

The communication subsystems 104, 105, 122 may include a receiver, transmitter, and associated components such as one or more embedded or internal antenna elements, Local Oscillators (LOs), and a processing module such as a Digital Signal Processor (DSP) in communication with the transmitter and receiver. The particular design of the communication subsystems 104, 105, 122, or other communication subsystem is dependent upon the communication network with which the electronic device 100 is intended to operate. Thus, it should be understood that the foregoing description serves only as one example.

Text-based content that is rendered for display may be obtained from a document such as a message, word processor document, webpage, or similar file, which is either obtained from memory at the device such as flash memory 108 or RAM 106, or obtained over a network connection. A suitable application, such as a messaging application, viewer application, or browser application, can process and render the document for display in accordance with any formatting or stylistic directives included with the document. FIG. 1 also illustrates possible principal components of the email messaging application 155 and browser application 160 such as a user interface module 156 for rendering user interface elements in display screens of the messaging application; a message data store or mail store 157 (this is considered to form part of the application 155 to the extent that it interoperates with the various application components and may be comprised in application memory, although in practice the mail store 157 may be located in memory 108 in the device 100 in a location distinct from the messaging application code itself); a script processor, plug-in, or virtual machine 158 for executing code snippets, scripts and the like embedded in, received with, or invoked by the message being processed by the application; and a layout engine 159 for generating a rendered version of email messages for output to the display 110.

The browser application 160 includes a user interface engine 161, layout or rendering engine 163, a script processor, plug-in, or virtual machine 162 for executing code snippets, scripts and the like embedded in, received with, or invoked by the webpage being processed. The browser application 160 may also have its own local store 164, allocated to the application from the volatile and/ or non-volatile memory 106, 108 of the electronic device 100. In some cases, the processing and layout components of the browser application 160 are used for rendering messages in place of the analogous components of the email application 155.

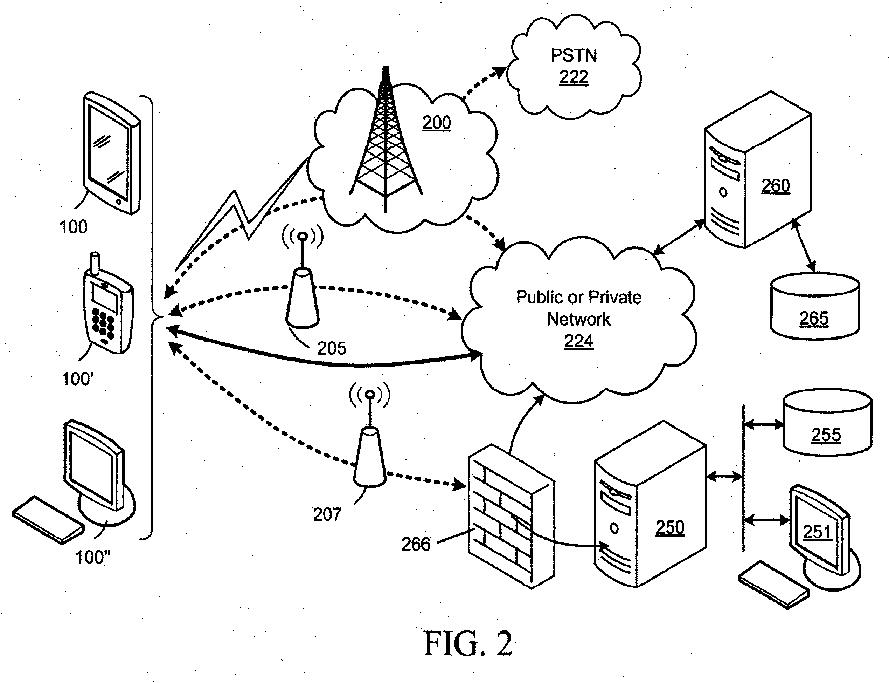

FIG. 2 illustrates an example of a possible network topology that may be used with the example electronic device 100. It will be understood by those skilled in the art that the schematic of FIG. 2 is merely representative of only particular aspects of a network, and omits other components that are typically included for ease of exposition, such as peripheral devices, routers, mobile data servers, and the like; and further, that the network illustrated herein may include different components and/or be arranged in different topologies than that shown in FIG. 2. Ahost system may be provided, which can be an own-premises local area network (LAN), or wide area network in communication with LANs, with local computing resources such as one or more servers 250, one or more data repositories 255 and client devices 251 such as terminals or workstations. The servers 250 and data repositories 255 represent controllers, security and information technology policy modules, application servers, messaging servers, file servers, databases, memory devices and the like for providing services to users over the LAN and also over the public or private network 224 to users at their respective electronic devices, and to transmit data (such as messages) to destinations and receive data from outside the host system over the network 224. The host system and its elements will include, as will be appreciated by those skilled in the art, those components generally included in such devices, such as communication subsystems for communicating over one or more fixed or wireless networks, one or more processors, data stores, disk arrays, and the like. The services can include but are not limited to messaging, directory services, collaborative applications, calendaring applications, search engines and file servers, and it will be appreciated by those skilled in the art that the various network components 250, 255, 251 will be adapted for use with those services.

Messaging services can be implemented using one or more servers 250 provided with means for storing messages (e.g., a database or a suitable data repository 255) for each message service or format available using the host system, such as email, instant messaging, voicemail, and the like. The server 250 (or a plurality of such servers) and its corresponding data repository 255 can therefore store all received and sent messages on behalf of each user, whether those messages originated inside or outside the host system. In some embodiments, messages sent and received by a user may be stored only locally on the user's client device and not maintained in a persistent store in the host system, while in other embodiments the messages are stored both locally at the client device as well as the server, in which case the message data stores on the client device and the server are synchronized or reconciled periodically. The user device may be any suitable computing or communication device adapted for composition and transmission of messages such as the client devices 251 or electronic devices 100, 100', 100" illustrated in FIG 2. In fact, a single user may use multiple devices 251, 100, 100', 100" to access the host system services. For ease of reference, a single device 100 is referred to although it will be appreciated by the reader that these embodiments may be implemented using each of these multiple devices.

The host system may operate from behind a firewall or proxy server 266, which provides a secure node and optionally a wireless internet gateway for the host system. Client devices such as the electronic device 100 can then access the host system wirelessly through the firewall or proxy server 266, as denoted by the access point 207. External access to the host system by devices 100 may also be provided via a public or private network 224. The device 100 may be configured to access the public switched telephone network 222 through a wireless network 200, which may comprise one or more nodes 202 configured for communication in accordance a suitable mobile telephony standard. In turn, the wireless network 200 provides the electronic device 100 with connectivity to the Internet or other public wide area network 224, and thence to the organization's host system. Alternatively or additionally, if the mobile device is provisioned to communicate over wireless networks that are typically IP-based, such as wireless LANs implementing the Wi-Fi protocol (one or more of the IEEE 802.11 suite of protocols), personal area networks implementing other protocols such as Bluetooth, other wireless networks implementing wireless broadband standards such as WiMAX (one or more of the IEEE 802.16 suite of protocols), and the like, the mobile device 100 accesses the public or private wide area network 224 through a third-party access point, such as the user's own personal access point and Internet connection, or a third party hotspot device, as denoted by the access point 205.

The services above, such as directory services and messaging, can be provided in a self-hosted system as suggested above, i.e., a host system supplied by and managed by the organization itself. However, the person skilled in the art will appreciate that one or more services provided to organization users may instead by provided by third parties in a software as a service, platform as a service, or infrastructure as a service arrangement, colloquially referred to as cloud computing services. For example, messaging services can be hosted by a third party service maintaining an external server 260 and data repository 265. Access to the external server 260 can be made available both externally to external client devices such as the electronic device 100, and to client devices 251 within the host system's LAN over the public or private network 224. Regardless, the host system's own network services are made available only to those users who possess sufficient credentials to access the services, whether they are accessed internally or externally, and whether provided by the self-hosted or the virtually (externally) hosted system. Messaging services in particular are accessible by the users through client messaging applications executing on the users' devices 100 which communicate with a message server such as the server 250 or 260.

The device 100, 100', 100", other client device 251, and/or the server 250, 260 (or another computing device in the host system) may be configured to implement the methods described herein. These embodiments are described principally with reference to email messages, the general form and construction of which will be known to those skilled in the art. For example, email messages and services may be constructed and implemented in accordance with known Internet messaging standards including Internet Message Format RFC 5322 and RFC 2822, published by the Internet Engineering Task Force, as well as their predecessor, successor, and companion standards. However, compliance with these particular standards is not required; other proprietary or custom formats maybe employed instead, but those skilled in the art will understand the general meaning and scope of "email" and other messages such as the aforementioned IM, social network messaging, direct messaging, and so forth.

Email is illustrated in these examples due to its prevalence; however it will be appreciated by those skilled in the art that these embodiments need not be restricted to this particular type text-based electronic communication data structures, but can be applied, with suitable modifications, to other message formats.

As noted above, the volume of messages that a user receives can be significant, even in the course of a single day. A contributing factor to a high volume of messages can include participation in message "conversations" or threads among a number of participants; the more participants involved, the greater the potential number of messages, especially if multiple participants respond to the same messages, or substantially repeat content in their respective contributions to the thread, unaware that other parties are contributing the same information. Lacking the usual conversational cues of in-person communication, a conversation taking place over a messaging service can last longer-and require more "turns" in the conversation-than an in-person conversation. Indeed, given that conversations taking place over messaging do not necessarily occur in real time and do not require the physical presence of a participant, messages can continue to flow in from other parties even when a user has stepped away from his or her communication device.

Messages or data pertaining to them can be retrieved for presentation at the communication device, for instance through a corresponding messaging application executing at the device. In addition, messages or their data can be retrieved or through a unified search or other separate application implemented on the communication device. An example of this latter type of application is a "unified inbox" or "unified message box", which is configured to present to the user a message listing display that can be considered to be a global message or content list. For clarity, the term "unified inbox", unless stated otherwise, is intended to be inclusive of an application providing message listings that can include references not only to received messages, but optionally also to "sent" messages originating and/or transmitted from the same electronic device, drafts, and other messages that are not received at the device or stored in received message folder or inbox data store. The unified inbox thus provides a unified view of message information that serves as an entry point for access to individual messaging services or individual messaging applications associated with each of the message types included in the unified inbox. The message or content elements displayed in the unified inbox display may include, in the case of messages such as e-mail, header data such as sender, timestamp, and subject line. In addition, or alternatively, at least a portion of the message body content may also be displayed an individual listing entry in the unified inbox. In the case of other message types, such as instant messages, the information displayed may include message body content in place of message header content. In the examples described herein, a unified inbox view is illustrated; however, it will be understood by those skilled in the art that use of a unified inbox view is not mandatory.

The presentation of those messages in a user interface-whether a unified inbox interface, messaging application interface, or other application interface-is often carried out by presenting messages in a list form, with one list entry per message. With a high volume of messages, this list can appear daunting to the user. The presentation of messages can be streamlined by presenting them in a "conversation" or "threaded" mode, in which messages identified as belonging to a common thread are grouped together and presented in a message listing view as a single entry, effectively reducing the number of entries presented in the list. Accessing these single thread entries via an inbox message view may then invoke a further message list view in which the messages identified as belonging to that thread are displayed.

However, as noted above, not every message is of interest or important to the user; even if the initial inbox view is compacted in a threaded mode, review of the actual messages in the thread is still required to locate the one message that conveys the "gist" of the discussion, or the messages that particularly require the user's response. Indeed, there may not be a single message or even a few messages that contain relevant information to the user; as those skilled in the art are well aware, conversations taking place over messaging can "fork" very easily, as multiple participants reply to the same message, or the same participant replies more than once to the same message; as a participant changes the topic of discussion; or as participants reply to earlier messages, rather than the most recent. A single thread can therefore branch off in several directions, resulting in several conversational "endpoints"-messages at the end of their respective branches with no further reply, either because the conversation in that branch has played out, or because the message was buried under numerous subsequent messages in other branches.

The user may thus find him or herself reviewing all the messages in the thread anyway. The retrieval, rendering, and display of messages by the communication device, of course, increase the consumption of device resources such as battery life, processor time, and memory. This increased consumption could be avoided if the salient messages were identified prior to the user starting his or her review of the message thread.

In some instances, a search can be employed to identify those messages that are of particular interest (or not of particular interest) to the user at a given time. This presumes, though, that the user knows in advance what keywords to search; thus, searching tends to be executed by a user because he or she has already read emails in the inbox, and is aware that there are likely messages matching the chosen keyword. Alternatively, a filtering function could be used to filter out messages of particular interest, as well; but again, this requires the user to know in advance what criteria to use in filtering.

Accordingly, methods and systems are presented for implementation with a communication device, such as the device 100, to process and present message threads to alleviate the drawbacks mentioned above.

In the examples described herein, a message thread comprises messages that are capable of organization into a hierarchical structure or a logical progression based on the interrelationship of the messages. In the realm of email, for example, it is common for messages to be grouped in a thread based on subject line, assigning all messages containing the same subject line (after excluding prefixes and tokens such as "Re:", "Fw:" and other strings denoting that a message is a reply or forward of a previous message) to the same thread. Other metadata attributes can be used as well; for example, if the message headers explicitly include a group or thread identifier, this can of course be used to group the messages in a thread. Message headers can also refer to the message identifier of the message's "parent" message, for example the message for which a given message is a direct reply (e.g. the "In-Reply-To" message identifier), or to one or more message identifiers of messages that are deemed to be related (e.g. "References" identifiers). These identifiers can be used to identify a set of messages that therefore belong to the same thread. Specific techniques for grouping messages into threads and providing thread data to messaging applications will be known to those skilled in the art. Examples can be found in United States Patent Application Publication No. 2011/0231499 and United States Patent Application Publication No. 2012/0210334. The operations of grouping messages by thread, and determining relationships between the messages in a thread, can be carried out by the device 100 or by a server prior to delivery of messages to the device 100. In the case where these operations are executed by the device 100, they may be implemented within a messaging application (for those messages handled by the messaging application), or they can be implemented by a separate component resident on the device such as a threading engine or manager component, which obtains message data from one or more message data stores and generates thread data for provision to messaging, unified inbox and other applications on request.

The relationship of each message to a next one in the thread can be identified from either the metadata attributes of the messages, from the content attributes of the messages, or both. An example of the former is the use of message identifiers listed in the message header; a hierarchical arrangement of the messages can be constructed using the message identifiers identified as the direct parent of each message, if available. For instance, starting with the most recent message in the thread, the immediate parent message in the thread can be identified based on the identifier listed in the header of the most recent message; the parent of the immediate parent can then be determined from the identifier listed in the header of the immediate parent, and so on, until a message having no identified parent is identified. In this manner, the parent-child relationship between "adjacent" messages in the thread is determined. As a next step, the next most recent message in the thread for which a parent-child relationship has not been determined is selected, and the same process is carried out until either the message having no identified parent is identified, or else a message already having a determined parent-child relationship is identified. This process continues until there are no further messages for which a parent-child relationship has not been determined.

A relationship can also be determined by comparing the content of the message bodies; with email in particular, subsequent messages often repeat content from their immediate parent message as a result of the function of the "Reply" and "Forward" function in email applications. Comparison of the replicated content in each message with the content of other messages in the thread can be used to infer a hierarchical relationship. Specific techniques that can be implemented by computing devices for determining the relationship among messages in a thread, and their hierarchical organization and their representation in a logical structure, will be known to those skilled in the art.

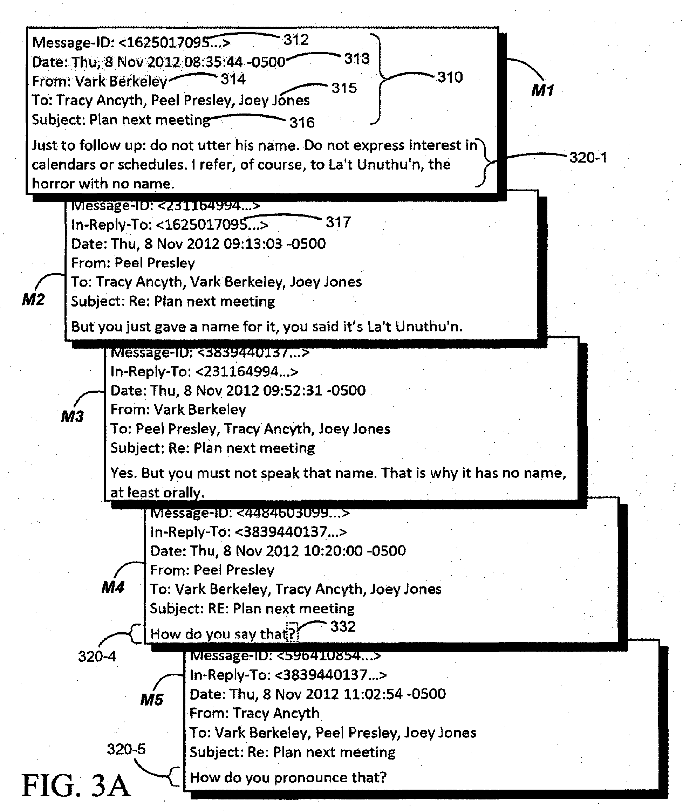

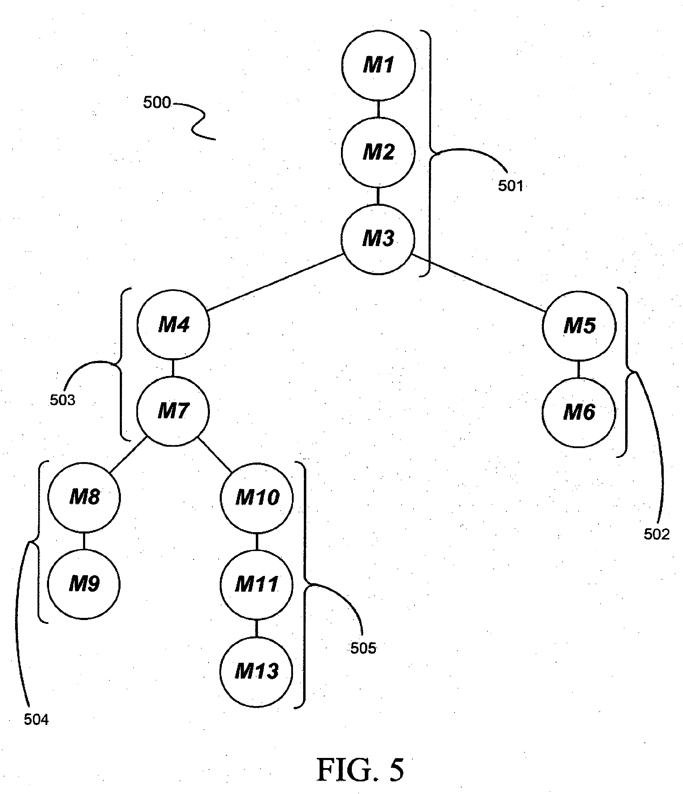

FIGS. 3A-C illustrate an initial thread of messages *M*1-*M*13 that will be used in the various examples described herein. The messages depicted in this example are email messages and thus comprise, as indicated for message *M*1, a message header 310 containing message metadata, in this case a message identifier 312, a timestamp 313, a sender identifier 314, one or more recipient identifiers 315 (sender and recipient identifiers are expressed as friendly names for ease of reference), and a subject line 316. The message also includes a message body 320-1 containing message content. Message *M*1 in this example can be considered to be the originating message of the thread of messages, with the remaining messages *M*2 to *M*13 being replies to an earlier message in the thread. Thus, *M*1 lacks, for example, an "In-Reply-To" value indicating that it is a reply to an earlier message; however, message *M*2, it can be seen, does include such a value 317. Those skilled in the art will realize that the messages in FIGS. 3A-C are abridgments of full email messages, since both the message header and body can include further components. Furthermore, as is common (but not mandatory) in email communication, reply messages often include repeated content from their parent message; this is not included in the figures. The particular relationship between the messages of FIGS. 3A-3C will be discussed in relation to FIG. 5.

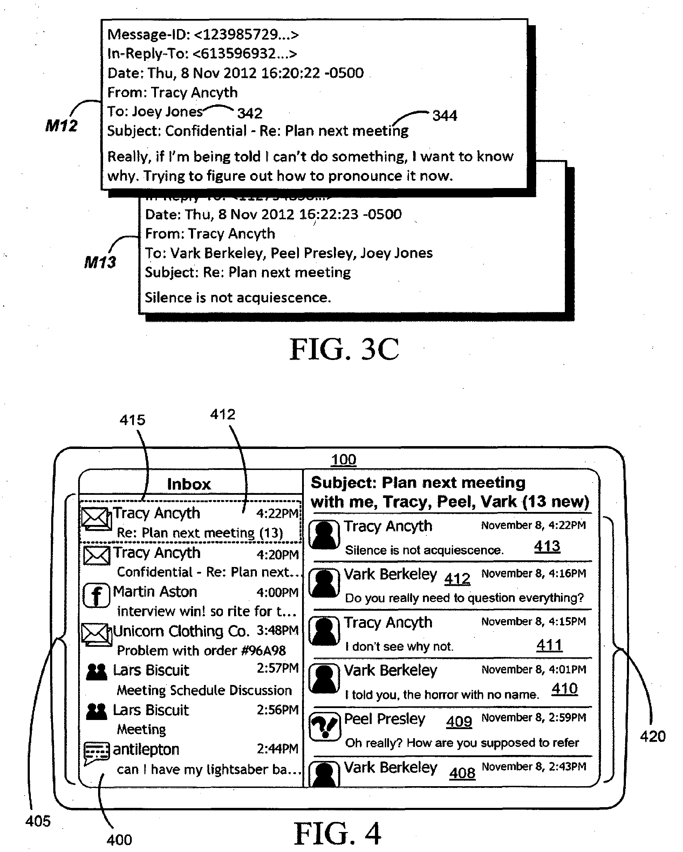

FIG. 4 illustrates a first message inbox view 400 that may be displayed by a device 100 referencing messages *M*1-*M*13. In the various examples provided herein, it is presumed that the user of the communication device 100 is the recipient "Joey Jones" referenced in the messages. In this example, the identification of messages belonging to the message thread was carried out based on common subject line content. Therefore, in this example and the examples of FIGS. 5 through 7C, message *M*12, having a different subject line 344 (as shown in FIG. 3C) is not included in the same thread as messages *M*1-*M*11 and *M*13. In this example message inbox view 400, an inbox listing of messages 405 in a threaded mode is provided. The first entry in the listing 412 identifies the thread *M*1-*M*11, *M*13. In this particular inbox layout, an adjacent portion of the view 400 comprises a preview region 420. In these examples, this particular display region 420 is referred to as a "preview" region; however, the region need not be used strictly for previewing messages. The region 420 can also accommodate functions such as message composition and management (e.g. marking messages as read, flagging, deleting, etc.), and messages that are displayed in the region 420 may be marked read as a result of such display. In response to selection of an item in the inbox message listing 405, at least some part of the selected item is displayed in the preview region 420. The layout and operation of message inbox views of this nature are known in the art, and it will be understood that different layouts or arrangements can be used in place of this example layout or in place of the example layouts discussed below. For example, there may be no adjacent display of the message listing 405 and a preview region 420; instead, an initial view of the message inbox may include only the message listing, and in response to selection of an item in the message listing, a view of that item is displayed in place of the message listing. Regardless, in the message inbox view 400, it can be seen that in response to selection of the message thread 412 in the listing 40 5, as indicated by highlight box 415, a further listing of individual messages has been displayed in the preview region 420.

The individual message listings here, 408, 409, 410, 411, 412 and 413, correspond to messages *M*9, *M*10, *M*11, *M*12, and *M*13, respectively. As is well understood, the message listing can include selected header information for each message (e.g. sender name, time), and optionally can include an excerpt of the message body content as well. The listing is typically, but not always, ordered in reverse chronological order.

It can be seen in FIG. 4 that the messages are thus presented in a linear style, which does not necessarily reflect all the contextual information available from the thread. For instance, as noted above, conversations may fork; multiple responses to messages can result in the message thread splitting off into different branches, possibly dealing with different topics of conversation. Because the messages in the message inbox view 400 are simply ordered in reverse chronological order, it may be that messages from different message branches are listed adjacent to each other; however, it is not readily apparent from the message listing in preview region 420 whether any such splitting has occurred; and if so, whether two adjacent messages are closely related to each other or not. Thus, it still falls on the user to review all the messages in the thread in order to reconstruct the conversation.

The particular hierarchical structure of the message thread *M*1-*M11,* M13 is illustrated in tree structure 500 in FIG. 5. In this example, the messages have been numbered in order of timestamp; thus, *M*1 is the earliest message, and *M*13 is the latest. In this thread, *M*1 is the originating message, and it has one child message (e.g. a reply to *M*1, or a message forwarding *M*1), *M*2; *M*2 in turn has one child message, *M*3. *M*3, on the other hand, is a parent to two child messages, *M*4 and *M*5. Thus, a first subset of messages 501 consists of *M*1, *M*2, and *M*3. This subset can be considered to be a single "branch" of the message thread; after *M*3, the branch splits into two further branches: branch 502, which begins with *M*5, which in turn has one child message, *M*6; and branch 503, beginning with *M*4, which has one child message *M*7. It can be seen in FIG. 5 that there is no further reply or other child message for *M*6; the branch terminates at that point. *M*7 has garnered two replies, and therefore has two child messages, *M*8 and *M*10. Thus, branch 503 terminates with *M*7, and two further branches 504 and 505 continue from branch 503. Branch 504 contains *M*8 and its child message, *M*10. Branch 505 contains *M*10, its child message *M*11, and *M*11's child message, *M*13.

Thus, it can be seen from FIG. 5 that a single message has spawned three different endpoints in conversation, following different paths: the conversation ending in message *M*13 contains eight messages and spans branches 501, 503, and 505; the conversation ending in message *M*9 contains seven messages and spans branches 504, 503, and 501; and the conversation ending in message *M*6 spans five messages and branches 502 and 501. All conversations have at least some overlap, and no single conversation includes all the messages of the thread; so, for example, if the user were to read only the most recent message in the thread-*M*13-he or she would not have seen all the message content of the thread, even if *M*13 replicated content of every single parent message in 501, 503 and 505. It can also be readily appreciated from FIG. 5 that the interrelationship among the messages in the thread is not at all apparent from the message listing 420 of FIG. 4.

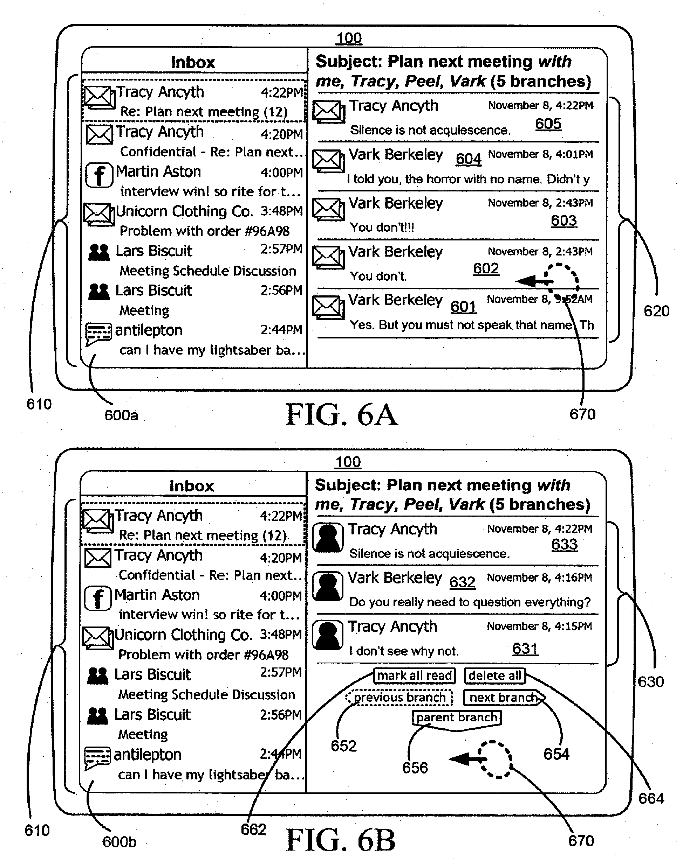

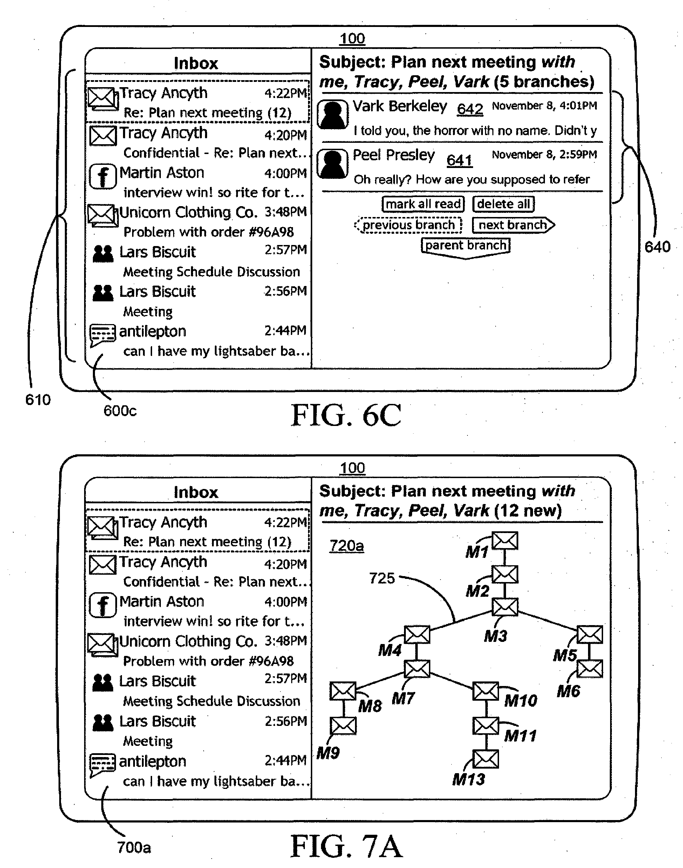

Accordingly, FIGS. 6A to 7C illustrate a message inbox view that provides additional context to the user and a more efficient means of navigating through messages in a complex or non-linear thread (i.e., a thread in which at least one message has more than one child message, resulting in multiple message branches). Turning back first to FIG. 5, it can be seen that the thread has been notionally divided into five non-overlapping branches 501, 502, 503, 504, 505. Each branch accordingly contains a distinct set of messages. Rather than displaying all twelve messages of the thread in a linear arrangement as in FIG. 4, these branches can be displayed in an intermediate listing that provides a visual representation of the hierarchical structure of the thread. Other subdivisions of the tree structure 500 are possible; for example, one branch may be designated for each endpoint message (*M*6, *M*9 and *M*13), and each branch may traverse the tree back to the originating message *M1*; it should be noted that this would result in overlap between branches.

Turning to FIG. 6A, a first message inbox view 600a is shown, again with an inbox message listing 610 in a threaded mode (similar to the message listing 405) and a preview region 620. Again, the thread containing messages *M*1*-M*11 and *M*13 has been selected. Thus, in the preview region 620, a listing of entries for each of message branches identified in FIG. 5 is provided, rather than a list of all messages in the thread. In this example, single entries 601, 602, 603, 604, and 605 represent the multi-message branches 501, 502, 503, 504, and 505, respectively, much in the way a single listing entry in the first message inbox view of FIG. 4 was used to represent an entire message thread; in this case, though, an intermediate view of the message thread is provided, listing the branches of the thread.

In this example, the list of branches is ordered in reverse chronological order, as determined by the timestamp of the latest message in each branch. The listing of these branches in this manner visually indicates the complexity of the thread's hierarchical structure by virtue of the number of branches listed; it also enables the user to easily access all of the conversational endpoints in the thread (messages *M*13, *M*9, and *M*6) since these are the most recent messages as indicated by entries 605, 604 and 603 in the preview region 620. In the branch listing of FIG. 6A, all branch endpoints (the final messages in each branch) are identified, since each branch listing entry includes message data relating to the most recent message received in each branch. Turning back to FIG. 4 by way of comparison, while *M*13 was indeed the first message listed in reverse chronological order (entry 413), the next endpoint, *M*9, was four entries lower and not readily identifiable as an endpoint in the message thread.

Returning to FIG. 6A, navigation to the messages belonging to each branch can be accomplished by selection of a branch listing entry 601, 602, 603, 604, 605, in a similar manner to the selection of the message thread in the inbox message listing 610. In the case of a touchscreen device, as is well known in the art, this can be accomplished by a tap or touch on the display screen in a region corresponding to one of the branch entries. Alternatively, a swipe gesture (e.g., to the left, as indicated by touch point and arrow 670) may be interpreted as a command to view details of the first listed branch 605. Regardless how the command or selection is implemented, a subsequent message listing view 600b as shown in FIG. 6B may then be displayed. In this example, the view 600b again retains the message inbox listing 610 (although as noted above this is not required), and replaces the display of the branch listing with a message listing 630 for the first branch listed in view 600a, in this case branch 505. The message listing 630 in this case includes entries 631, 632 and 633 for messages *M*10, *M*11, and *M*13, respectively. Selection of one of these entries 631, 632, or 633 would then invoke a display of the message itself (not shown).

In addition, the view 600b can include user interface elements for managing the messages of this particular branch, such as "mark all read" 662, to mark all messages in the branch 505 as "read", as that term is generally understood in the art; or to "delete all" 664, to delete all messages in the branch 505. In a linear display such as that shown in FIG. 4, the user would have to either delete each message in a given branch (if the user were able to identify them) one by one, or attempt to select them in the message listing 420 and delete them in bulk. In the example of FIG. 6B, however, the user can easily bulk delete an entire branch of the message thread with a single command without inadvertently deleting other messages in the thread. Other management operations (e.g., flagging the messages, or filing them in a designated folder), not shown, may also be provided.

The view 600b also includes user interface elements for navigation to the previous branch 652, next branch 654, and parent branch 656, if any, of the currently displayed branch. As shown in the case of element 652, when a particular branch is not available (in this case the "previous branch", since the view is currently displaying the first branch), the element can be disabled and either removed from the display or visually distinguished from the other elements to indicate its unavailability. Again, in the case of a touchscreen device, a swipe gesture as indicated by touch point and arrow 670 may also be used to navigate to the next branch of messages, which is shown in the next message listing view 600c. In this view 600c, message listing 640 lists the messages from branch 504, containing messages *M*9 and *M*8, as represented by entries 642 and 641.

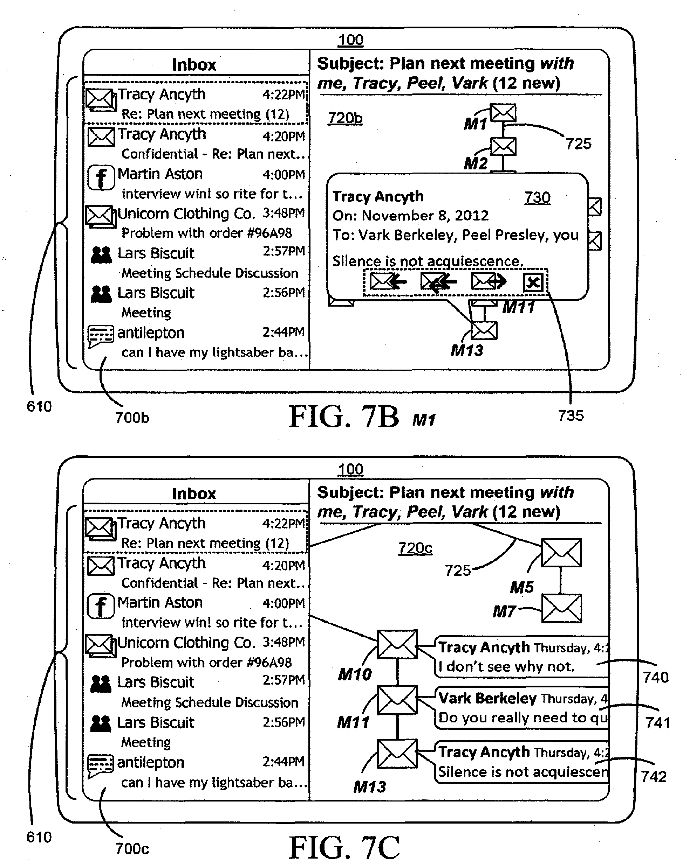

A graphical representation of the message thread may be employed in place of the branch and message listings of FIGS. 6A-C. Turning to FIG. 7A, a further message inbox view 700a is shown, in which messages *M*1*-M*11*, M13* and their parent-child relationships are illustrated visually in a graphical representation 725 in the preview region 720a. In this example, the messages can be represented by icons, and optionally, depending on the available space on the display 110, additional data concerning the messages (e.g. sender, time, and an excerpt of the content) may be displayed in the preview region as well. In this example, selection of a single message icon on the screen may invoke a further message view displaying the corresponding message. Alternatively, as can be seen in FIG. 7B, additional information may be provided with the graphical representation 725. FIG. 7B illustrates a further message inbox view 700b; in this case, upon selection or detection of a "hover" action on a given message in the preview region 720b, a message overlay 730 is displayed containing a preview of the message content, as well as selected metadata. The overlay 730 may include all of the message content, and/ or may also include user interface elements 735 for interacting with the message (e.g. sending replies, forwarding, deleting, marking as read (not shown), and so on). As another alternative, the content of the preview region may be enlarged to permit further detail to be viewed. Turning to FIG. 7C, an example of a further message inbox view 700c is shown in which the graphical representation 725 has been enlarged (for example, in response to a zoom command or gesture); upon reaching a particular zoom threshold, preview content 740, 741, 742 for the messages visible in the preview region 720c may be displayed. As those skilled in the art will appreciate, when only a portion of the graphical representation 725 is visible in the preview region 720c, panning may be enabled for the display to permit navigation to other messages not currently displayed.

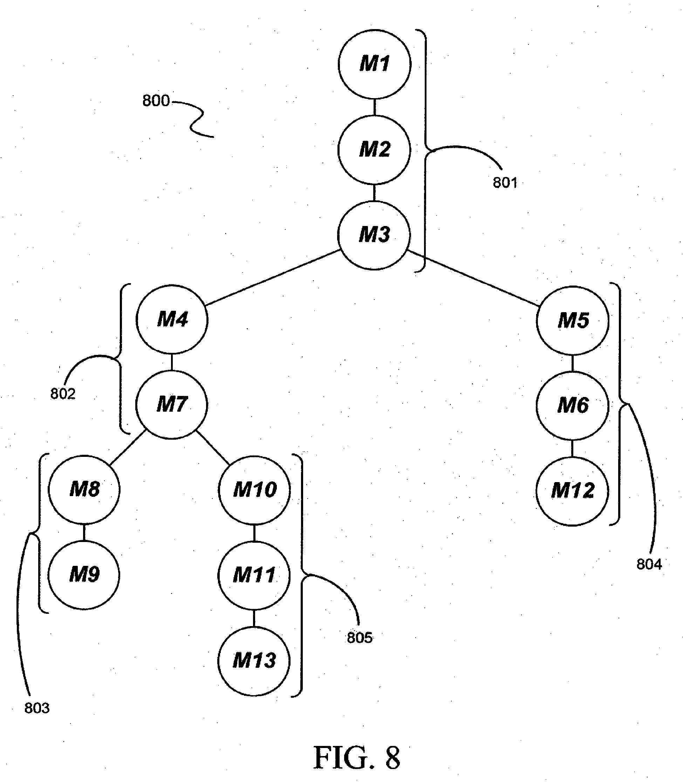

Navigation through the messages of a message thread can be further improved with the use of profiling to assist in the identification of particular branches and messages of interest. This feature will be described with reference to a modified hierarchical thread structure, which will now include message *M*12. In the earlier examples, membership in the message thread was determined based on common subject matter content; accordingly, a message with a changed subject line, such as *M*12, would not be identified as a member of the earlier thread. In this example, membership in the message thread is determined using another factor, such as a group or thread identifier assigned to all the messages in the thread, or based on identification of each message's immediate parent in its message header. The modified hierarchical structure is shown in the tree structure 800 FIG. 8, and again includes five message branches: branch 801, which includes messages *M*1 to *M*3; branch 802, with messages *M*4 and *M*7; branch 803, with messages *M*8 and *M*9; branch 804, with messages *M*5, *M*6, and *M*12, since *M*12 is a child message of *M*6; and branch 805 having messages *M*13, *M*11, and *M*10. The structure of the message thread here is quite similar to that depicted in FIG. 5, but differs in that the branch that previously terminated with *M*6 now terminates with *M*12; accordingly, the chronological order of the branches (based on the timestamp of the most recent message in each branch) is also different from the thread in FIG. 5.

During the course of a thread, a number of events that are of potential relevance to a participant can occur: for instance, a question maybe posed in a message, which remains unanswered; the participant may be referenced by name in the message text, which may mean that the message is about him or her; in the course of a thread with several participants, a message may be addressed to the participant alone, or to a subset of the larger group of participants, suggesting a private or semi-private conversation; the subject line of a message of a message maybe changed, which can be indicative of a change of topic; or a particular message may spawn a flurry of activity with a number of messages being sent and received within a relatively short period of time, which could be indicative of a topic of great interest. Some of these events can be inferred from characteristics of the messages, namely, the values of certain attributes of the message: metadata attributes (e.g., timestamps and sender/recipient information) and content attributes (e.g., the presence of the user's name being present in new content). Therefore, one or more profile properties based on individual message characteristics is determined for each branch of the message thread, and these properties are included with the thread and branch data provided to the inbox application or other application displaying the branch listing for the message thread.

The profile for a given message branch is developed once the hierarchical structure of the message thread has been determined. Metadata and message body content information for the messages belonging to each branch are retrieved, and are used to determine one or more message conditions for each branch. These message conditions are then used to identify one or more profile properties for the branch, and can also be used to identify one or more message properties for the individual messages in the branch.

Table 1 sets out examples of message conditions and corresponding properties derivable from those conditions:

**Table 1**

| Message Conditions | Message Property | Branch Profile Property |
|---|---|---|
| Body content of message in branch contains question mark ("?") Branch does not contain a subsequent message without a question mark | Message contains unanswered question | Contains an unanswered question |
| Message body content contains user's name in new message content Branch does not contain a subsequent message from user | Refers to user by name | Contains reference to user by name |
| Message is addressed only to user Branch does not contain a subsequent message from user | Addressed to user only | Addressed to user only |
| Subject line change from previous message | Possible topic change | Possible topic change |
| Addressee change from previous message | Change in addressees | Change in addressees |
| Message having the most direct replies in the thread | Hot message | Contains hot message |
| Branch having the most messages within a defined period of time | n/a | Most active |
| No message from user in the branch | n/a | Unattended |

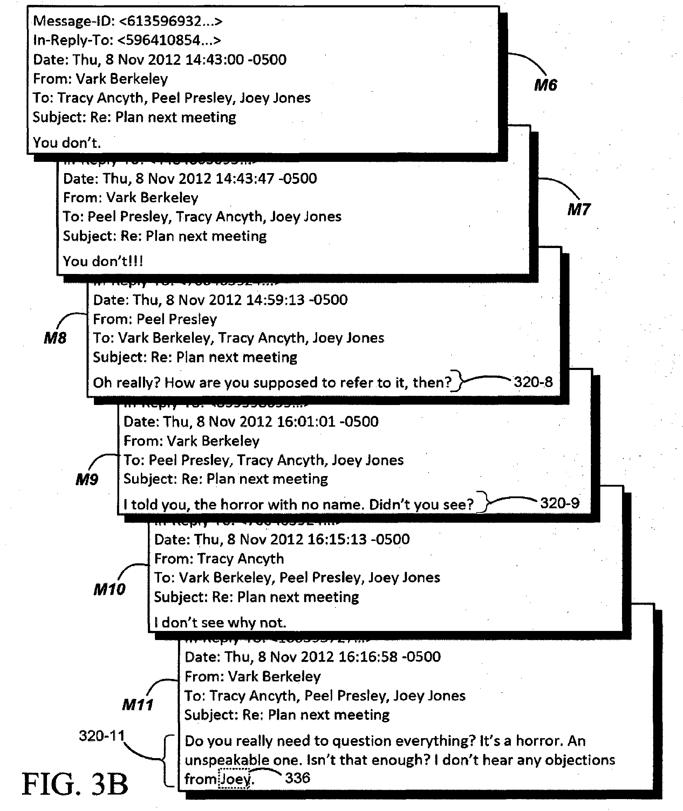

The table above illustrates that some branch profile and individual message properties can be discerned from a single message's metadata and content, while others require comparison with or consideration of other messages. For instance, the first branch profile property listed, "Contains an unanswered question", requires that two conditions be met: a message in the branch must contain a question mark, and the branch must not contain a subsequent message without a question mark. These conditions are premised on rules approximating conversational communications-namely, that messages including questions have question marks (or other punctuation indicative of a question), and messages that supply answers do not; and that a message sent subsequent to a question is likely an answer to the question. Referring back to FIG. 3A, it can be seen that message bodies 320-4 and 320-5 of messages *M*4 and *M*5, respectively, each contain a question mark (as indicated in message *M*4 at 332). In FIG. 3B, message bodies 320-8, 320-9, and 320-11 of messages *M*8, *M*9, and *M*11 also contain question marks. Both *M*4 and *M*5, however, are the first messages in their respective message branches 802 and 804, as can be seen in FIG. 8; as the remaining messages in those branches do not contain question marks, they do not meet both of the message conditions specified for the first property. *M*11 in branch 805 is followed by child message *M*13, and similarly does not meet both of the message conditions. However, messages *M*8 and *M*9 are the only members of their branch 803, and there is no subsequent message; accordingly, branch 803 acquires a profile property of "Contains an unanswered question" as a result of the unresolved "question mark" messages *M*8 and *M*9. At the same time, the individual messages with unresolved questions can also be assigned a distinct message property, expressed in Table 1 above as "Message contains unanswered question".

It may be noted that a message in the thread, particularly when the thread is an email thread, may contain replicated content from one or more parent messages. That content may include the punctuation or other strings being searched during the process of evaluating the branch's profile properties. Therefore, when the message content is evaluated against the conditions specified above, replicated content from parent messages is ignored, and only the "new" content (which typically precedes the replicated content, and is distinguishable from the replicated content due to the use of delimiters or prefixes separating the new content from the replicated content) is evaluated.

The second example in Table 1 is also premised on a rule approximating conversational communication: that when a participant in a conversation is referred to by name within the message content, the participant is likely expected to specifically read and possibly acknowledge that message. Accordingly, the message content is scanned for one or more strings matching the user's name (e.g. friendly name or first name). If such a message is found and the message branch does not include a subsequent message from the user, then the message can be assigned the property "Refers to user by name", and the branch can be assigned the property "Contains reference to user by name". Turning back to FIG. 3B again, the message body 320-11 of message *M*11 includes the text string "Joey" 336, the first name of the user of the communication device 100 in these examples. Message branch 805, which contains the message *M*11, also includes a subsequent message *M*13; however, this message is not from the user. Accordingly, both the message and the branch may be assigned the above-noted properties.

In an alternate embodiment, a further set of message conditions can be defined to identify those branches that contain a message with a question explicitly directed to the user that has not been answered by the user; effectively, a combination of the first two sets of example conditions in Table 1. Thus, for example, if a message contains both a question mark or other indicium of a question being posed and a string matching the user's name, and if the message branch does not contain a subsequent message from the user, then the branch is determined to have the property of containing an unanswered question directed to the user.

Also following Table 1, message *M*12 meets the conditions of being addressed only to the user, having a change in addressees from a previous message, and having a subject line change from a previous message, as shown in FIG. 3C; accordingly, *M*12 can be assigned the properties of "Addressed to user only", "Change in addressees", and "Possible topic change", as can message branch 804, which contains *M*12. The remaining message branches of the thread, 901 and 902, thus have a null set of profile properties.

Conditions requiring a ranking of messages or branches against all other messages and branches, such as the conditions of "message having the most direct replies in the thread" and "branch having the most messages within a defined period of time", can also be evaluated with respect to a threshold value. For example, referring to FIG. 8, it can be seen that two messages, *M*3 and *M*7, have the most direct replies; however, they each only have two direct replies, which by even a subjective standard is not a particularly notable amount. Accordingly, a threshold number of direct reply messages may be required before a message or branch is evaluated for the property of a "Hot message". A similar threshold may be applied to the condition of "branch having the most messages within a defined period of time".

Although not included in Table 1, some or all of the message conditions listed above can be combined with the further condition that the message at issue has not been marked read. For example, even if a message represented a change in subject line, neither it nor its branch would be assigned the accompanying property if the message had also been marked read.

The example message conditions and properties listed in Table 1 above are intended to be non-limiting. Other properties for the message and/or branch may be defined with corresponding message conditions. The properties listed above may also be defined to have different message conditions than those listed in the table. For instance, a linguistic analysis may be carried out on the message content to determine whether a message is in fact asking a question or seeking information, whether the message is punctuated with a question mark or not.

The determination of the message and/or branch profile properties can be carried out by the same component carrying out the threading and identification of branches, or can be carried out by a separate profiling engine, as discussed below.

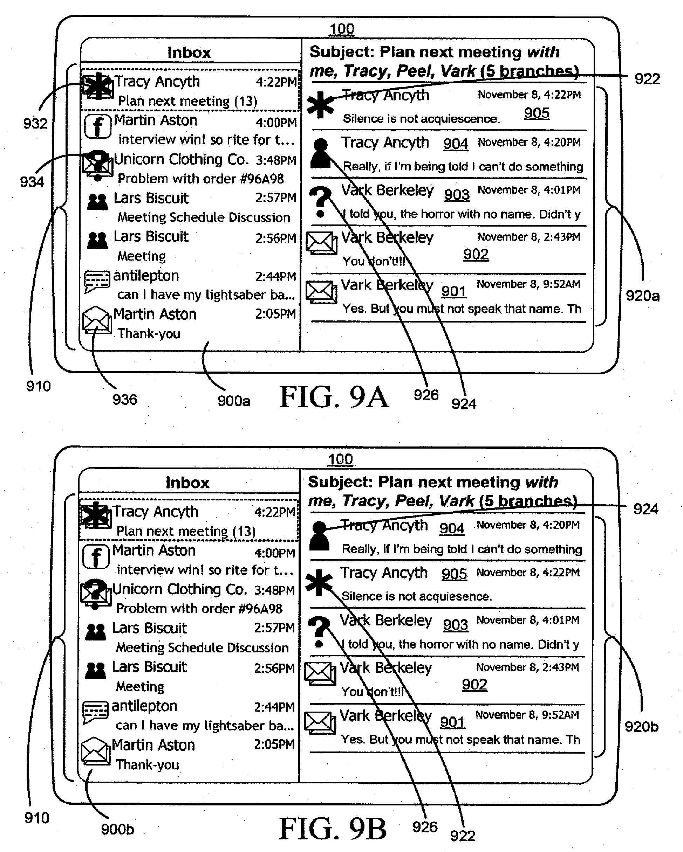

Once the message properties and branch profile properties have been determined, one or both sets of properties may be passed to the message application or other inbox application together with the thread and branch data. An example of a message inbox view 900a incorporating the branch profile properties in the branch listing is shown in FIG. 9A. As in the earlier examples, the view 900a includes a message inbox listing 910 including a listing entry for the message thread; the preview region 920a of the view 900a again lists the series of branches 801, 802, 803, 804, and 805, as represented by listing entries 901, 902, 903, 904 and 905, respectively. However, the entries in the branch listing now include a visual indicator of a select branch profile properties. Above, thread 803 was determined to have the property of containing an unanswered question; accordingly, listing 903 includes a visual indicator 926 of this property. Thread 804 was determined to have the properties of containing a possible topic change, and containing a message addressed to the user alone; while multiple visual indicators could be displayed in conjunction with entry 904 to represent both of these properties, in some examples, such as that of FIG. 9A, one visual indicator is selected. If the various properties associated with a branch are the result of different messages in the branch, then the profile property associated with the most recent of those messages in the branch may be selected for visual representation. Alternatively, the various properties maybe ranked in order of importance to the user: for instance, if a message that is addressed exclusively to the user is more important than a change in subject line or other change in addressees, then a visual indicator of the fact that the message was exclusively addressed to the user is used, such as visual indicator 924. Finally, branch 805 was determined to contain a message that referred to the user by name; accordingly listing 905 is displayed with a visual indicator 922 for this property. For those branches that have a null set of profile properties, the messaging or other application may use default visual indicators to depict a status of the messages in those branches (e.g. read, unread).

It may be noted that other branch profile properties may be properly associated with various branches according to Table 1; for instance, the user has not contributed any messages to the thread at all by this point, so all branches are appropriately profiled as "Unattended". Not every profile property need be provided to the messaging or other application displaying the messages and branches, however.

In addition to indicating branch profile properties in a visual indicator in the branch listing, the thread to which the branches belong can also be displayed in a message inbox listing with a visual indicator representing a status of the thread derived from the branch profile properties. Just as with the individual branch, a single visual indicator may be selected for display in the message inbox listing in association with the message thread to indicate a predominant, more important, or more recent property associated with the thread. In FIG. 9A, for example, the thread listing corresponding to the branches shown in region 920 is accompanied by a visual indicator representing the branch profile property assigned to the most recent branch in the thread (or, alternatively, the most recent property assigned to any branch in the thread). Another listing for a message thread in the message inbox listing 910 is accompanied by a visual indicator 934 of a different property. A third listing of a message thread has no properties assigned to its branches or messages, or at least has no assigned properties that are represented by a visual indicator; accordingly it is displayed with a default icon 936 for a message thread listing. In other examples, all properties that are associated with message branches are indicated by visual indicators with the thread listing. Thus, message threads in their entirety may have profile properties determined for them in a similar manner that a message branch has profile properties determined for it. In some embodiments, the branch profile properties may be displayed with visual indicators, while the thread profile properties are not visually indicated; in other embodiments, only the thread profile properties are visually indicated and branch profile properties are not.

Since branch profile properties have been associated with the message branches of the thread, the displayed listing of message branches can be sorted according to those properties. The ranking of branch profile properties may be user-defined, or defined in the displaying application itself. For instance, messages addressed exclusively to the user may be deemed more important than any other kind of message, and therefore should be ranked first. Turning to FIG. 9B, message inbox view 900b depicts a list of branches in preview area 920b after sorting. In this example, the branch containing a message exclusively addressed to the user 904 is ranked above the branch containing a message referencing the user by name 905, and above the branch containing an unanswered question 903. It will be appreciated by those skilled in the art that in the case of a particularly complex message thread, there may be a larger number of branches than can be easily displayed in a single view without scrolling. Because the branch listing itself can be sorted in this manner, based on profile properties derived from the attributes of the messages contained in each branch, those branches of the greatest potential interest can be identified quickly, thus minimizing the amount of time and device resources spent reviewing messages in the thread.

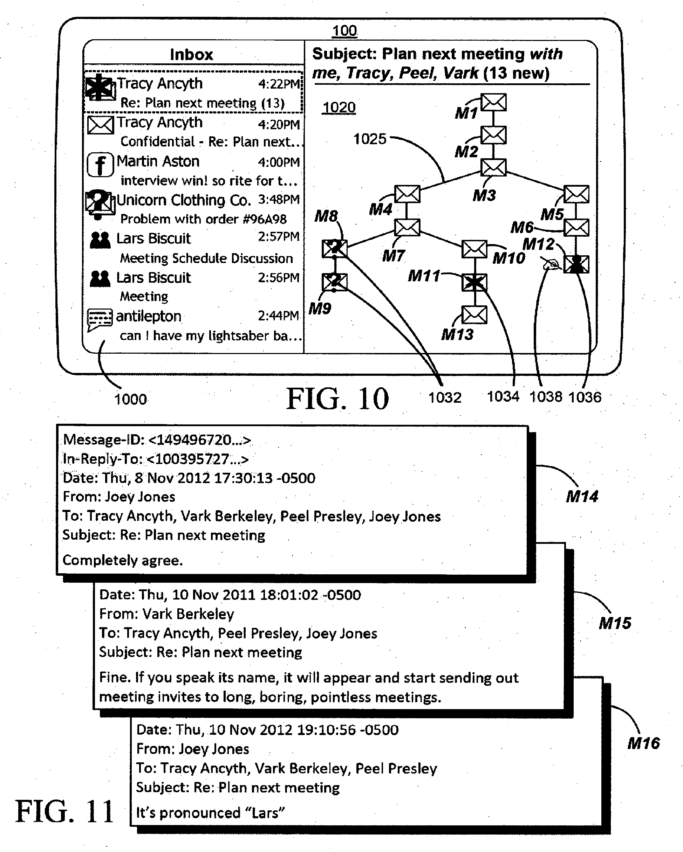

The graphical representation of the message thread initially shown in FIGS. 7A-C can also be enhanced with profile information. FIG. 10 provides an example message inbox view 1000 including a graphical representation 1025 of the message thread in the preview region 1020. Included in the representation 1025 are visual indicators 1032, 1034, 1036, and 1038 representing various individual message properties as determined above. This visual overview of the entire message thread thus immediately identifies the messages that are likely the most relevant to the user.

It will be appreciated by those skilled in the art that because the message conditions used to determine the various message and branch profile properties are based, in part, on further responses in a given branch, the participants' further activity-and especially the user's activity-in the message thread will affect the properties of both messages and branches. FIG. 11 illustrates three further messages belonging to the same thread *M*1-*M*13. Message *M*14 is a reply to *M*10 from the user; *M*15 is a further message from another participant to the others, in response to *M*10 as well; and *M*16 is a further response by the user to *M*12. Further, in this example, it is presumed that the user had read (or marked as read) at least those messages preceding his own in the branch. Thus, for example, the user read or marked as read all messages of branch 804 at the time he responded with *M*16 in that branch; however, since he only responded to *M*10 in branch 805, he only read or marked as read *M*10, but not the later messages *M*11 or *M*13 in that branch.

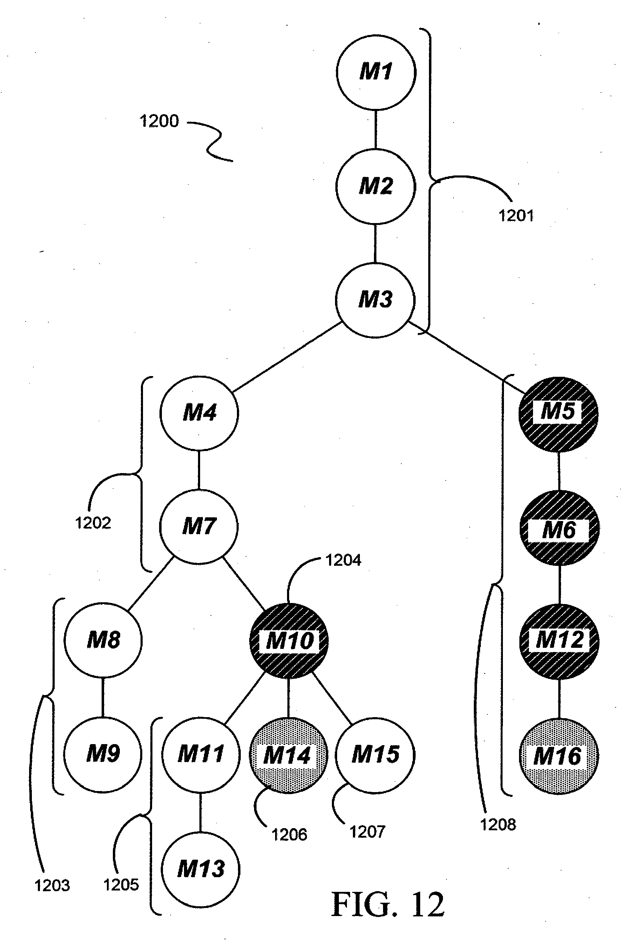

A resultant tree structure 1200 depicting the new hierarchical organization of the messages in the thread is shown in FIG. 12. The three oldest branches (1201, 1202, and 1203) remain in the same state that they were in prior to the addition of these new messages (as shown at 801, 802, and 803 in FIG. 8). The three-message long branch that had originated at *M*10 has now been truncated to a branch 1205 containing two messages, *M*11 and M12, as a result of messages *M*14 and *M*15, which are child messages of *M*10. There are now a number of single-message branches 1204, 1206 and 1207. Branch 1208 is now the longest branch, with four messages. In FIG. 12, the darker shading of messages *M*5, *M*6, *M*10, and *M*12 indicates the messages now marked as read by the user; the lighted shading of *M*14 and *M*16 indicates messages sent by the user. The result of the additional messages is that there are now five conversation endpoints (*M*9, *M*13, *M*14, *M*15, and *M*16) rather than the previous three, and eight branches instead of the previous 5.

Some change will result from the addition of these messages to the thread: *M*12, which had been addressed directly to the user, has now been answered, and the branch 1208 now includes a responding message from the user. Accordingly, the profiles of the message *M*12 and of the branch 1208 can be updated to remove the previously assigned properties, since the conditions are no longer met. It may be noted that message *M*12 may still retain the property of a changed subject line; however, if the condition that the message must not be marked read is also applied, as described above, then *M*12 will not retain this property; in the following figures, it is presumed that this is the case.

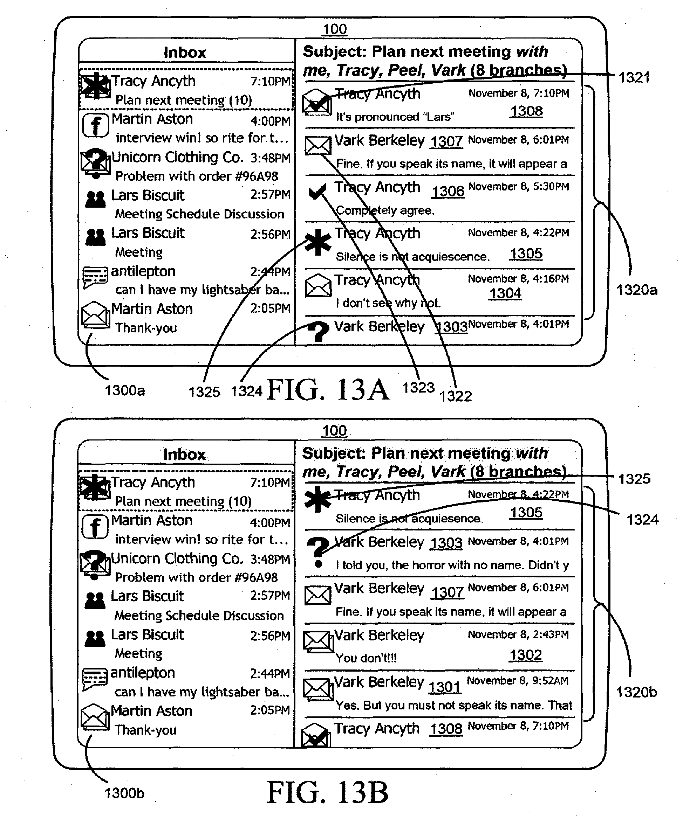

FIG. 13A illustrates an updated message inbox view 1300a as a result of these message additions. Preview region 1320a now includes more branch listing entries 1303, 1304, 1305, 1306, 1307, and 1308, corresponding to message branches 1203 through 1208; branches 1201 and 1202 are not visible in the currently displayed list. These entries are listed in reverse chronological order, and are accompanied by a combination of default visual indicators such as 1321, 1322, 1323 representing a status of the branch, for those branches with a null set of profile properties (e.g., read messages, new/unread messages, sent messages), and profile property-specific visual indicators 1324, 1325 for those branches having a profile property assigned (it can be seen that the properties of branches 1204 and 1205, represented by entries 1304 and 1305, remain unchanged). Due to the reverse chronological ordering of the message branch listing, these branches determined to have some particular relevance are lower down in the list, since they are not the most recent messages. Again, though, turning to FIG. 13B, the message branch listing may be sorted according to a predefined profile order so that those branches associated with non-null profiles can be listed in advance of the remaining messages branches. The remaining branches may also be sorted according to a determined importance; for instance, unread branches may be listed ahead of branches whose messages have been marked read.

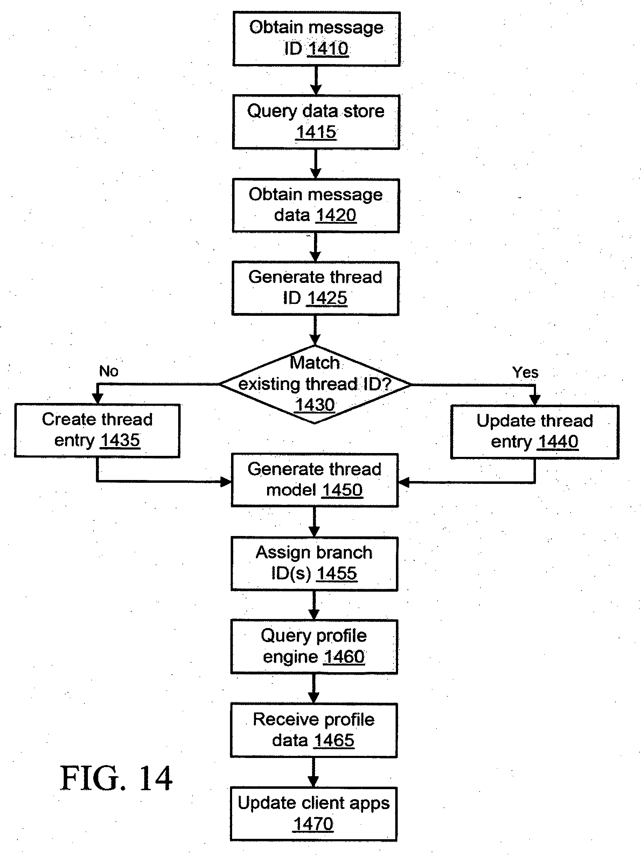

FIG. 14 is a flowchart of an example method that can be implemented by the component, such as a threading manager, carrying out the message threading and provision of thread and profile information to client applications executing on the device 100. This method can be carried out by a messaging application as well, rather than by a distinct threading manager. Once a new message is received in a data store associated with the device 100, the threading manager obtains the message identifier for that message at 1410. At 1415, it queries the message data store for message data required to determine thread membership and hierarchy; at 1420, this data is obtained from the message data store. The data can include metadata from the header (e.g. In-Reply-To or References values, if available; timestamp; subject line; sender and recipients); if threading is determined based on message content, the message content is obtained as well. At 1425, a thread identifier is generated from the message data. If it is determined at 1430 that the generated thread identifier does not match an existing thread identifier in a thread index maintained by the threading manager, then at 1435 a new entry for the thread is created in the index. The entry can include message metadata such as the message identifier for that message, its timestamp, and optionally other attribute values. If the generated thread identifier does match an existing identifier, meaning that one or more messages have been received in that thread already, then at 1440 the entry in the index is updated with the metadata for the message.

Next, at 1450, a hierarchical model of the message thread is generated based on the known messages belonging to the thread. The branches of the model are identified, and a distinct branch identifier is assigned to the messages of each branch at 1455. It should be noted that the receipt of a new message can in fact require a re-generation of the hierarchical model, and re-identification of its branches, as demonstrated earlier with reference to FIG. 12. Branch data may be stored together with the thread data in the thread index, or maintained in a different store.

Once the branches have been identified, the profile engine is queried at 1460 to obtain a profile for each branch. The profile is determined from characteristics of the individual messages. If the threading manager is unable to provide the profile engine with sufficient message data directly, the threading manager may simply provide the profile engine with the message identifiers for each branch in the thread, so that the profile engine can obtain the needed message data from the appropriate message data store itself. Depending on the message conditions to be applied for a given message property or branch profile property, for each message, the profile engine identifies one or more message characteristics, and determines whether the message characteristics meet the established conditions for the property. For instance, with reference to Table 1, if the property is that the message/branch contains an unanswered question, message content data is obtained from the message data store so that the profile engine can scan the content of the message for a question mark (or whatever other indicator is being used as part of the condition). If the property is that the message is addressed exclusively to the user, then message metadata is obtained from the message data store so that the profile engine can identify the recipient(s) of the message.

In the case of an unanswered question, a second condition that must be met is that there must be no subsequent message without a question mark in the branch containing the message with the question mark. Accordingly, the profile engine must also retrieve message content data for any subsequent messages in the branch from the message data store, and scan those as well; in other words, the subsequent messages are subject to the same message characteristic evaluation. If no such subsequent message is found, then the profile engine associates the message with the property that it contains an unanswered question; the branch is likewise associated with a similar property. In the case of a message addressed exclusively to the user, there may not be any further conditions; so, if the condition is met, the corresponding properties are associated with the message and branch.

The profile engine then returns the properties associated with the messages and branches at 1465. The threading manager can then update any client applications listening for thread and branch data at 1470 by providing the message identifiers and their associated branch identifiers for the thread, in addition to any properties associated with the messages or branches. The client applications can then process the received data, retrieving any additional message data needed from the message data store as needed, and display the branches, messages and associated profile information as described earlier.

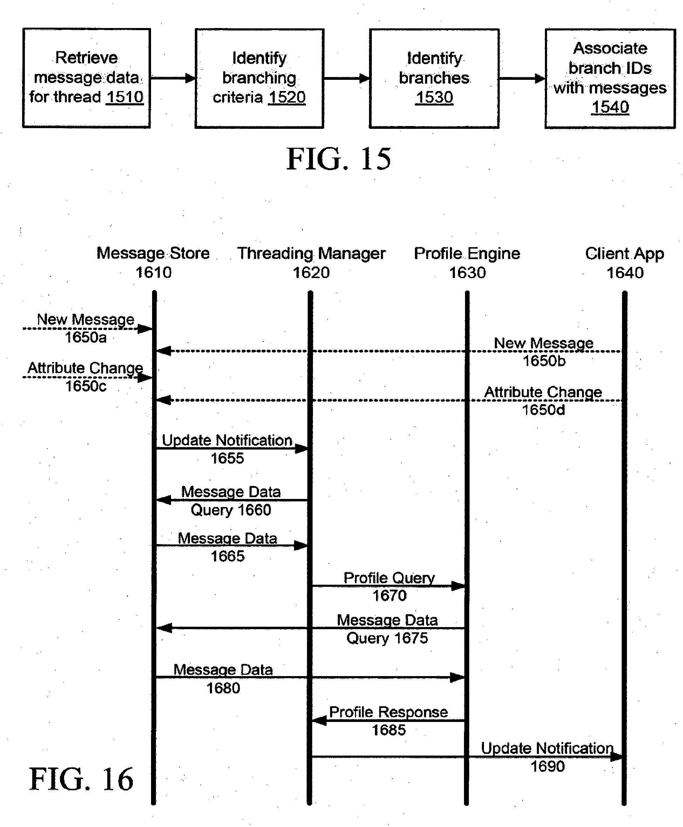

FIG. 15 illustrates a high-level method for providing the branch identifiers for associating with the messages of a thread. Again, this may be carried out by a threading manager if it is not implemented within the messaging application. At 1510, message data for the thread is retrieved from a message data store. The message data that is retrieved can depend on the algorithm used to model the hierarchical structure of the message thread. For instance, if relationships between messages are determined strictly based on metadata such as an In-Reply-To or a similar value, then only header data may be necessary. At 1520, the criteria used to divide the hierarchical structure into discrete branches is identified. This identification may occur prior to retrieving the message data; it may be configured in the threading manager implementing this method. In the examples of FIGS. 5, 8 and 12, a branch terminates with a message that either has no child messages (because it is a conversational endpoint), or with a message that has more than one child message (because the branch splits into further branches at this point); if the message has more than one child message, then each of those children are allocated to a corresponding new branch. Other branching criteria can be defined. For example, the greatest weight could be given to the branch traversing the tree structure from a conversational endpoint to the originating message that has the most messages. In the example of FIG. 12, this would be the branch leading from M13 back to *M*1. All other branches are then defined as branches traversing the tree structure from another one of the conversational endpoints towards the first branch, such that there is no overlap. Whichever criteria are used, at 1530 these branches are identified; then, at 1540, branch identifiers are associated with each of their corresponding messages.

As mentioned earlier, the functions of grouping messages in threads, determining their hierarchical relationship, identifying branches, and determining message and branch properties for the threads can be implemented within a single messaging application, in which case the aforementioned threading manager and profile engine for part of the messaging application itself. The messaging application therefore executes its threading and profiling processes as the content of its message data store changes. The properties determined for the branch and the messages can be stored in the message data store controlled by the application.

Alternatively, the threading manager and profile engine can be independent of any messaging applications or inbox applications on the device 100, in which case the threading manager and profile engine may serve a number of messaging applications or accounts, and optionally multiple message formats. FIG. 16 illustrates an example of communication flow between a message data store 1610, a threading manager 1620, a profile engine 1630, and a client application served by the threading manager 1620 and profile engine 1630. The client application may be a messaging or unified inbox application executing on the device 100. It should be noted that it is not necessary that the data store 1610, threading manager 1620, and profile engine 1630 be located at the device 100 as well. These components may be provided at a remote location, and can serve data to the device 100 over a network.

A change is initially detected at the message data store 1610 at 1650a, 1650b, 1650c, or 1650d, which illustrate possible scenarios prompting a detected change. For example, a new message, or several new messages, may be received in an inbound message queue for the message data store 1610. Alternatively, one or more new messages may originate from the device 100 itself, in the form of an outbound message saved to the message data store 1610. The change may also result from a status or attribute change for a message received for a message in the message data store 1610, such as an unread message being marked as read.

In response to this detected change, an update notification 1655 is sent to the threading manager 1620. This update notification 1655 may be pushed out to the threading manager 1620; alternatively, the threading manager 1620 may be configured to listen for notifications of changes to the message data store 1610. The update notification notifies the threading manager 1620 of new information concerning a message that can be used to update one or more message threads. The threading manager 1620 then may query 1660 the message data store 1610 for any pertinent information to be used to determine thread membership and branch relationships for the thread. This message data is returned in a message data response 1665. Again, this new or changed message information may require a restructuring of the hierarchical model of the message thread, and re-identification of the various branches thereof. Once this is carried out and the branches of the thread re-identified, the threading manager 1620 sends a query 1670 to the profile engine 1630 to obtain message properties and branch profile properties for the current messages and branches. The query 1670 can include only the identifiers of all the messages within the branch; however, if properties such as the "Most active" branch are to be determined, then identifiers for all branches, and the identifiers for each message associated with each branch, will need to be provided to the profile engine 1630. The profile engine 1630 can then query 1675 the message data store 1610 for the message metadata and content needed to determine properties for the individual messages and the branches in the manner discussed earlier. The message data store returns the requested message data in a response 1680, and the profile engine 1630 then carries out its evaluation.

One the message and branch properties have been determined by the profile engine 1630, the profile engine 1630 returns the results in a response 1685 to the threading manager 1620. The threading manager 1620 may then send an update notification 1690 to the client application 1640, notifying it of new thread, branch, and message data, and associated properties. The client application 1640 can then update its display of the branches and associated profiles.

In this example, the threading manager 1620 manages the delivery of thread profile properties and message property information to the client application. It will be understood by those skilled in the art that his particular arrangement is not limiting; for instance, the client application 1640 could receive thread and branch data from the threading manager 1620, but query the profile engine 1630 directly itself. Alternatively, the threading manager 1620 may continue to be a separate component from the client application 1640, but the profile engine 1630 could be integrated with the client application 1640; thus, whenever the client application 1640 receives updated thread and branch information from the threading manager 1620, it can evaluate the messages in the thread and determine the message properties and branch profile properties itself.

There is thus provided a method, comprising: receiving a plurality of messages, the plurality of messages belonging to a single message thread; identifying at least two branches of the single message thread, each branch comprising a distinct one or more of the plurality of messages; in response to selection of the single message thread for display by a communication device, displaying, on a display of the communication device, a listing of the at least two branches, each branch being represented by a single entry in the listing.

In one aspect, the method further comprises, for each of the at least two branches, determining a profile property corresponding to the branch, the profile property being determined from characteristics of the one or more messages comprised in the branch; and ordering the listing of the at least two branches according to their corresponding profile property.

In another aspect, determining the profile property for each of the at least two branches comprises a profile engine: querying a message data store for message data relating to the messages comprised in each of the at least two branches; receiving the message data; using the message data to determine whether any of the messages comprised in any of the at least two branches have characteristics meeting conditions associated with a corresponding one or more profile properties; and associating those branches comprising messages having characteristics meeting said conditions with the corresponding one or more profile properties.

In a further aspect, determining the profile property corresponding to the branch comprises: for each of the one or more messages comprised in the branch, identifying at least one characteristic of the message; determining, using the at least one characteristic, whether the message meets a set of one or more conditions associated with a profile property; and when the message meets the set of one or more conditions, associating the branch with the profile property.

Further, determining the profile property corresponding to the branch may comprise: determining whether one of the one or more messages comprised in the branch meets a first condition associated with a profile property; determining whether the branch meets a further condition associated with the profile property; and when the message and the branch meet their respective conditions, associating the branch with profile property.

The further condition may comprise a condition that the branch does not contain a message from a user of the communication device subsequent to the one of the one or more messages.

In still another aspect, the first condition comprises one of: the message body content comprising a question mark; the message body content comprising the user's name; or the message being addressed only to the user.

Still further, the method may also comprise: detecting a change to the single message thread; re-identifying at least two branches of the changed single message thread; for each of the at least two branches thus re-identified, determining a profile property corresponding to the branch, the profile property being determined from characteristics of the one or more messages comprised in the re-identified branch; and updating a displayed listing of the at least two branches to display a listing of the at least two re-identified branches, each branch being represented by a single entry in the listing, the listing of the at least two re-identified branches being ordered according to their corresponding profile property.

In another aspect, the change may be an addition of a new message to the single message thread. In addition or alternatively, the change may be at least one of the plurality of messages of the single message thread being marked as read.

In yet another aspect, identifying the at least two message branches comprises generating a logical structure representing a hierarchical relationship among the plurality of messages, the logical structure including the at least two message branches.

In still a further aspect, the method may further comprise displaying a message inbox listing including a single entry for the single message thread, the selection of the single message thread comprising selection of the single entry for the single message thread via a user interface, and optionally, in response to a selection of one of the at least two message branches comprised in the listing, displaying a listing of the one or more messages comprised in the message branch.

In another aspect, the method may also comprise, in response to a single command, deleting only those messages of the selected message branch.

There is also provided a communication device such as the communication device described herein, configured to implement the methods and variations described above. There is further provided a data bearing medium, which may be non-transitory or physical, bearing code which when executed by one or more processors of a suitable device or devices causes said device or devices to implement the methods and variations described above.

It should be understood that steps and the order of the steps in the processing described herein may be altered, modified and/ or augmented and still achieve the desired outcome. Moreover, all of the various examples and modifications described throughout this specification can be combined and should not be considered to be discrete embodiments. Throughout the specification, terms such as "may" and "can" are used interchangeably and use of any particular term should not be construed as limiting the scope or requiring experimentation to implement the claimed subject matter or embodiments described herein.

The systems' and methods'data maybe stored in one or more data stores. The data stores can be of many different types of storage devices and programming constructs, such as RAM, ROM, flash memory, programming data structures, programming variables, etc. It is noted that data structures describe formats for use in organizing and storing data in databases, programs, memory, or other computer-readable media for use by a computer program.

Code adapted to provide the systems and methods described above may be provided on many different types of computer-readable media including computer storage mechanisms (e.g., CD-ROM, diskette, RAM, flash memory, computer's hard drive, etc.) that contain instructions for use in execution by a processor to perform the methods' operations and implement the systems described herein.

The computer components, software modules, functions and data structures described herein may be connected directly or indirectly to each other in order to allow the flow of data needed for their operations. Various functional units described herein have been expressly or implicitly described as modules and agents, in order to more particularly emphasize their independent implementation and operation. It is also noted that an agent, module or processor includes but is not limited to a unit of code that performs a software operation, and can be implemented for example as a subroutine unit of code, or as a software function unit of code, or as an object (as in an object-oriented paradigm), or as an applet, or in a computer script language, or as another type of computer code. The various functional units may be implemented in hardware circuits such as custom VLSI circuits or gate arrays; field-programmable gate arrays; programmable array logic; programmable logic devices; commercially available logic chips, transistors, and other such components. Modules implemented as software for execution by a processor or processors may comprise one or more physical or logical blocks of code that may be organized as one or more of objects, procedures, or functions. The modules need not be physically located together, but may comprise code stored in different locations, such as over several memory devices, capable of being logically joined for execution. Modules may also be implemented as combinations of software and hardware, such as a processor operating on a set of operational data or instructions.

US7007226 (B1) discloses high-density computer display visualization formats that provide improved visualization of large amounts of threaded information. These visualization formats are suitable for a wide variety of threaded information environments including newsgroups, threaded Web discussions, chats, e-mail inboxes, etc. In one implementation, the threaded message visualization represents each post with a generally one-dimensional or narrow entry line. The entry lines are horizontal and arranged vertically in substantially the same indented threading arrangement as the text of a conventional prior art visualization. In other implementations, the appearance (e.g., color), length, and position of entry lines can represent additional selected information while maintaining the generally one-dimensional character of the entry lines.

US2009029674 (A1) discloses a method that may include collecting historical communication data and personal data relating to a portion of a plurality of communications, a sender of one or more of the communications or one or more recipients of the communications. The method may include depositing the collected data into a repository of historical communication data and personal data. The method may include presenting one or more items in the repository on a mobile device, in response to user behavior.

US8332477 (B1) discloses methods, systems, and apparatus, including computer programs encoded on a computer storage medium, for presenting related conversations. In one aspect, it is determined that a portion of a conversation thread includes an exchange of messages between fewer than a predetermined number of conversation participants. Based on determining that the portion of the conversation thread includes the exchange of messages between fewer than the predetermined number of conversation participants, a conversation view can be generated that that includes a flattened representation of the portion of the conversation thread.

## Claims

1. A method, comprising:
receiving a plurality of messages, the plurality of messages belonging to a single message thread(M1- M11) having a heirarchial structure;
identifying at least two branches (501, 502, 503, 504) of the single message thread, each branch comprising a distinct one or more of the plurality of messages;
in response to selection of the single message thread for display by a communication device (100), displaying, on a display (103) of the communication device, a listing of the at least two branches (501, 502, 503, 504, 505), each branch being represented by a single entry in the listing, the listing of the at least two branches providing a visual representation of the hierarchical structure of the thread
for each of the at least two branches (501, 502, 503, 504), determining a profile property corresponding to the branch, the profile property being determined from characteristics of the one or more messages comprised in the branch; and
ordering the listing of the at least two branches according to their corresponding profile property and wherein each of the single entries has the same dimensions on the display as the others of the single entries, the method further comprising, in response to a selection of one of the at least two message branches comprised in the listing, displaying a listing of the one or more messages comprised in the message branch.

2. The method of claim 1, wherein determining the profile property for each of the at least two branches comprises a profile engine(1630):
querying a message data store (157) for message data relating to the messages comprised in each of the at least two branches;
receiving the message data;
using the message data to determine whether any of the messages comprised in any of the at least two branches (801, 802, 803, 804, 805) have characteristics meeting conditions associated with a corresponding one or more profile properties; and
associating those branches comprising messages having characteristics meeting said conditions with the corresponding one or more profile properties.

3. The method of claim 1, wherein determining the profile property corresponding to the branch comprises:
for each of the one or more messages comprised in the branch,
identifying at least one characteristic of the message (M1 - M13);
determining, using the at least one characteristic, whether the message meets a set of one or more conditions associated with a profile property; and
when the message meets the set of one or more conditions, associating the branch with the profile property.

4. The method of claim 1, wherein determining the profile property corresponding to the branch comprises:
determining whether one of the one or more messages (M1 - M13) comprised in the branch meets a first condition associated with a profile property;
determining whether the branch meets a further condition associated with the profile property;
when the message and the branch meet their respective conditions, associating the branch with profile property (1455).

5. The method of claim 4, wherein the further condition comprises a condition that the branch does not contain a message from a user of the communication device subsequent to the one of the one or more messages.

6. The method of claim 5, wherein the first condition comprises one of:
the message body (320) content comprising a question mark;
the message body content comprising the user's name (320); or
the message being addressed only to the user (904).

7. The method of any one of any preceding claim, further comprising:
detecting a change to the single message thread;
re-identifying at least two branches of the changed single message thread;
for each of the at least two branches thus re-identified, determining a profile property corresponding to the branch, the profile property being determined from characteristics of the one or more messages comprised in the re-identified branch; and
updating a displayed listing of the at least two branches to display a listing of the at least two re-identified branches, each branch being represented by a single entry in the listing, the listing of the at least two re-identified branches being ordered according to their corresponding profile property.

8. The method of claim 7, wherein the change is an addition of a new message to the single message thread.

9. The method of claim 7, wherein the change is at least one of the plurality of messages of the single message thread being marked as read.

10. The method of any one of claims 1 to 9, wherein identifying the at least two message branches comprises:
generating a logical structure representing a hierarchical relationship among the plurality of messages, the logical structure including the at least two message branches.

11. The method of any one of claims 1 to 10, further comprising:
displaying a message inbox listing (405; 610) including a single entry for the single message thread, the selection of the single message thread comprising selection of the single entry for the single message thread via a user interface (156).

12. The method of any preceding claim , further comprising, in response to a single command, deleting only those messages of the selected message branch.

13. A communication device (100) configured to implement the method of any one of claims 1 to 12.

## Patentansprüche

1. Ein Verfahren, das aufweist:
Empfangen einer Vielzahl von Nachrichten, wobei die Vielzahl von Nachrichten zu einem einzelnen Nachrichten-Thread bzw. -Thema (M1 - M11) mit einer hierarchischen Struktur gehört;
Identifizieren von zumindest zwei Zweigen (501, 502, 503, 504) des einzelnen Nachrichten-Threads, wobei jeder Zweig eine eindeutige eine oder mehrere der Vielzahl von Nachrichten aufweist;
in Reaktion auf eine Auswahl des einzelnen Nachrichten-Threads zur Anzeige durch eine Kommunikationsvorrichtung (100), Anzeigen, auf einer Anzeige (103) der Kommunikationsvorrichtung, einer Liste der zumindest zwei Zweige (501, 502, 503, 504, 505), wobei jeder Zweig durch einen einzelnen Eintrag in der Liste dargestellt wird, wobei die Liste der zumindest zwei Zweige eine visuelle Repräsentation der hierarchischen Struktur des Threads vorsieht;
für jeden der zumindest zwei Zweige (501, 502, 503, 504), Bestimmen einer Profileigenschaft entsprechend dem Zweig, wobei die Profileigenschaft aus Charakteristiken der einen oder mehreren Nachricht(en) bestimmt werden, die in dem Zweig enthalten ist/sind; und
Ordnen der Liste der zumindest zwei Zweige nach ihrer entsprechenden Profileigenschaft, und wobei jeder der einzelnen Einträge dieselben Dimensionen auf der Anzeige wie die anderen der einzelnen Einträge hat, wobei das Verfahren weiter aufweist, in Reaktion auf eine Auswahl von einem der zumindest zwei Nachrichtenzweige, die in der Liste enthalten sind, Anzeigen einer Liste der einen oder mehreren Nachricht(en), die in dem Nachrichtenzweig enthalten ist/sind.

2. Das Verfahren gemäß Anspruch 1, wobei das Bestimmen der Profileigenschaft für jeden der zumindest zwei Zweige aufweist, dass eine Profilmaschine (1630):
einen Nachrichtendatenspeicher (157) hinsichtlich Nachrichtendaten in Bezug auf die Nachrichten abfragt, die in jedem der zumindest zwei Zweige enthalten sind;
die Nachrichtendaten empfängt;
die Nachrichtendaten verwendet, um zu bestimmen, ob eine der Nachrichten, die in einem der zumindest zwei Zweige (801, 802, 803, 804, 805) enthalten sind, Charakteristiken hat, die Bedingungen erfüllt, die mit einer entsprechenden einen oder mehreren Profileigenschaft(en) assoziiert sind; und
die Zweige, die Nachrichten mit Charakteristiken aufweisen, die die Bedingungen erfüllen, mit der/den entsprechenden einen oder mehreren Profileigenschaft(en) assoziiert.

3. Das Verfahren gemäß Anspruch 1, wobei das Bestimmen der Profileigenschaft entsprechend dem Zweig aufweist:
für jede der einen oder mehreren Nachricht(en), die in dem Zweig enthalten ist/sind,
Identifizieren zumindest einer Charakteristik der Nachricht (M1 - M13); Bestimmen, unter Verwendung der zumindest einen Charakteristik, ob die Nachricht einen Satz von einer oder mehreren Bedingung(en) erfüllt, die mit einer Profileigenschaft assoziiert ist/sind; und
wenn die Nachricht den Satz von einer oder mehreren Bedingung(en) erfüllt, Assoziieren des Zweigs mit der Profileigenschaft.

4. Das Verfahren gemäß Anspruch 1, wobei das Bestimmen der Profileigenschaft entsprechend dem Zweig aufweist:
Bestimmen, ob eine der einen oder mehreren Nachricht(en) (M1 - M13), die in dem Zweig enthalten ist/sind, eine erste Bedingung erfüllt, die mit einer Profileigenschaft assoziiert ist;
Bestimmen, ob der Zweig eine weitere Bedingung erfüllt, die mit der Profileigenschaft assoziiert ist;
wenn die Nachricht und der Zweig ihre jeweiligen Bedingungen erfüllen, Assoziieren des Zweigs mit der Profileigenschaft (1455).

5. Das Verfahren gemäß Anspruch 4, wobei die weitere Bedingung eine Bedingung aufweist, dass der Zweig keine Nachricht von einem Benutzer der Kommunikationsvorrichtung nachfolgend auf die eine der einen oder mehreren Nachricht(en) enthält.

6. Das Verfahren gemäß Anspruch 5, wobei die erste Bedingung eines aufweist aus:
der Inhalt des Nachrichtentexts (320) weist ein Fragezeichen auf;
der Inhalt des Nachrichtentexts weist den Namen (320) des Benutzers auf; oder
die Nachricht ist nur an den Benutzer adressiert (904).

7. Das Verfahren gemäß einem der vorhergehenden Ansprüche, das weiter aufweist:
Erfassen einer Änderung des einzelnen Nachrichten-Threads;
erneutes Identifizieren von zumindest zwei Zweigen des geänderten einzelnen Nachrichten-Threads;
für jeden der zumindest zwei somit erneut identifizierten Zweige, Bestimmen einer Profileigenschaft entsprechend dem Zweig, wobei die Profileigenschaft aus Charakteristiken der einen oder mehreren Nachricht(en) bestimmt wird, die in dem erneut identifizierten Zweig enthalten ist/sind; und
Aktualisieren einer angezeigten Liste der zumindest zwei Zweige, um eine Liste der zumindest zwei erneut identifizierten Zweigen anzuzeigen, wobei jeder Zweig durch einen einzelnen Eintrag in der Liste dargestellt wird, wobei die Liste der zumindest zwei erneut identifizierten Zweige gemäß ihrer entsprechenden Profileigenschaft geordnet ist.

8. Das Verfahren gemäß Anspruch 7, wobei die Änderung ein Hinzufügen einer neuen Nachricht zu dem einzelnen Nachrichten-Thread ist.

9. Das Verfahren gemäß Anspruch 7, wobei die Änderung ist, dass zumindest eine der Vielzahl von Nachrichten des einzelnen Nachrichten-Threads als gelesen markiert wird.

10. Das Verfahren gemäß einem der Ansprüche 1 bis 9, wobei das Identifizieren der zumindest zwei Nachrichtenzweige aufweist:
Erzeugen einer logischen Struktur, die eine hierarchische Beziehung unter der Vielzahl von Nachrichten repräsentiert, wobei die logische Struktur die zumindest zwei Nachrichtenzweige umfasst.

11. Das Verfahren gemäß einem der Ansprüche 1 bis 10, das weiter aufweist:
Anzeigen einer Nachrichteneingangsliste (405; 610) mit einem einzelnen Eintrag für den einzelnen Nachrichten-Thread, wobei die Auswahl des einzelnen Nachrichten-Threads eine Auswahl des einzelnen Eintrags für den einzelnen Nachrichten-Thread über eine Benutzerschnittstelle (156) aufweist.

12. Das Verfahren gemäß einem vorhergehenden Anspruch, das weiter, in Reaktion auf einen einzelnen Befehl, ein Löschen nur dieser Nachrichten des ausgewählten Nachrichtenzweigs aufweist.

13. Eine Kommunikationsvorrichtung (100), die konfiguriert ist, das Verfahren gemäß einem der Ansprüche 1 bis 12 zu implementieren.

## Revendications

1. Procédé, comprenant :
la réception d'une pluralité de messages, la pluralité de messages appartenant à un seul fil de messages (M1 - M11) ayant une structure hiérarchique ;
l'identification d'au moins deux branches (501, 502, 503, 504) du seul fil de messages, chaque branche comprenant un ou plusieurs messages distincts de la pluralité de messages ;
en réponse à la sélection du seul fil de messages pour l'affichage par un dispositif de communication (100), l'affichage, sur un afficheur (103) du dispositif de communication, d'un listage des au moins deux branches (501, 502, 503, 504, 505), chaque branche étant représentée par une seule entrée dans le listage, le listage des au moins deux branches fournissant une représentation visuelle de la structure hiérarchique du fil ;
pour chacune des au moins deux branches (501, 502, 503, 504), la détermination d'une propriété de profil correspondant à la branche, la propriété de profil étant déterminée à partir de caractéristiques des un ou plusieurs messages compris dans la branche ; et
le fait d'ordonner le listage des au moins deux branches en fonction de leur propriété de profil correspondante et où chacune des seules entrées a les mêmes dimensions sur l'afficheur que les autres des seules entrées, le procédé comprenant en outre, en réponse à une sélection d'une des aux moins deux branches de messages comprises dans le listage, l'affichage d'un listage des un ou plusieurs messages compris dans la branche de messages.

2. Procédé selon la revendication 1, dans lequel la détermination de la propriété de profil pour chacune des au moins deux branches comprend un moteur de profil (1630) :
interrogeant une mémoire de données de message (157) pour des données de message relatives aux messages compris dans chacune des au moins deux branches ;
recevant les données de message ;
utilisant les données de message pour déterminer si des messages quelconques des messages compris dans l'une quelconque des au moins deux branches (801, 802, 803, 804, 805) ont des caractéristiques satisfaisant à des conditions associées à une ou plusieurs propriétés de profil correspondantes ; et
associant ces branches, comprenant des messages ayant des caractéristiques satisfaisant auxdites conditions, aux une ou plusieurs propriétés de profil correspondantes.

3. Procédé selon la revendication 1, dans lequel la détermination de la propriété de profil correspondant à la branche comprend :
pour chacun des un ou plusieurs messages compris dans la branche,
l'identification d'au moins une caractéristique du message (M1 - M13) ;
la détermination, en utilisant l'au moins une caractéristique, du fait que le message satisfait à un ensemble d'une ou plusieurs conditions associées à une propriété de profil ; et
lorsque le message satisfait à l'ensemble d'une ou plusieurs conditions, l'association de la branche à la propriété de profil.

4. Procédé selon la revendication 1, dans lequel la détermination de la propriété de profil correspondant à la branche comprend :
la détermination du fait qu'un des un ou plusieurs messages (M1 - M13) compris dans la branche satisfait à une première condition associée à une propriété de profil ;
la détermination du fait que la branche satisfait à une condition supplémentaire associée à la propriété de profil ;
lorsque le message et la branche satisfont à leurs conditions respectives, l'association de la branche à la propriété de profil (1455).

5. Procédé selon la revendication 4, dans lequel la condition supplémentaire comprend une condition selon laquelle la branche ne contient pas de message en provenance d'un utilisateur du dispositif de communication à la suite dudit un message des un ou plusieurs messages.

6. Procédé selon la revendication 5, dans lequel la première condition comprend un parmi :
le contenu du corps de message (320) comprenant un point d'interrogation ;
le contenu du corps de message comprenant le nom de l'utilisateur (320) ; ou
le message étant adressé uniquement à l'utilisateur (904).

7. Procédé selon l'une quelconque des revendications précédentes, comprenant en outre :
la détection d'un changement sur le seul fil de messages ;
la ré-identification d'au moins deux branches du seul fil de messages changé ;
pour chacune des au moins deux branches ainsi ré-identifiés, la détermination d'une propriété de profil correspondant à la branche, la propriété de profil étant déterminée à partir de caractéristiques des un ou plusieurs messages compris dans la branche ré-identifiée ; et
la mise à jour d'un listage affiché des au moins deux branches pour afficher un listage des au moins deux branches ré-identifiées, chaque branche étant représentée par une seule entrée dans le listage, le listage des au moins deux branches ré-identifiées étant ordonné en fonction de leur propriété de profil correspondante.

8. Procédé selon la revendication 7, dans lequel le changement est un ajout d'un nouveau message au seul fil de messages.

9. Procédé selon la revendication 7, dans lequel le changement consiste en au moins un message de la pluralité de messages du seul fil de messages qui est marqué comme lu.

10. Procédé selon l'une quelconque des revendications 1 à 9, dans lequel l'identification des au moins deux branches de messages comprend :
la génération d'une structure logique représentant une relation hiérarchique parmi la pluralité de messages, la structure logique incluant les au moins deux branches de messages.

11. Procédé selon l'une quelconque des revendications 1 à 10, comprenant en outre :
l'affichage d'un listage de boîte de réception de message (405 ; 610) incluant une seule entrée pour le seul fil de messages, la sélection du seul fil de messages comprenant la sélection de la seule entrée pour le seul fil de messages via une interface utilisateur (156).

12. Procédé selon l'une quelconque des revendications précédentes, comprenant en outre, en réponse à une seule commande, le fait de supprimer uniquement ces messages de la branche de messages sélectionnée.

13. Dispositif de communication (100) configuré pour mettre en oeuvre le procédé selon l'une quelconque des revendications 1 à 12.
